# EUROPEAN PATENT SPECIFICATION

(11) **EP 4 383 102 B1**
(45) Date of publication and mention of the grant of the patent: **28.10.2026**
(21) Application number: 22863106.5
(22) Date of filing: 15.08.2022
(51) Int. Cl.: B60R 25/24, B60R 25/25, B60R 25/32, G06F 21/31, B60W 40/09

(54) **IDENTITY AUTHENTICATION METHOD, AND VEHICLE**
IDENTITÄTSAUTHENTIFIZIERUNGSVERFAHREN UND FAHRZEUG
PROCÉDÉ D´AUTHENTIFICATION D´IDENTITÉ ET VÉHICULE

(30) Priority: 31.08.2021 CN 202111013038
(43) Date of publication of application: 12.06.2024
(73) Proprietor: Huawei Technologies Co., Ltd., Shenzhen, Guangdong 518129 (CN)
(72) Inventor: LI, Changting, Shenzhen, Guangdong 518129 (CN); WANG, Muyang, Shenzhen, Guangdong 518129 (CN); FANG, Xiwen, Shenzhen, Guangdong 518129 (CN); MA, Xiaoshuang, Shenzhen, Guangdong 518129 (CN); PAN, Dongxue, Shenzhen, Guangdong 518129 (CN)
(74) Representative: Goddar, Heinz J.
(86) International application number: PCT/CN2022/112483
(87) International publication number: WO 2023/029966

(56) References cited:
- CN-A- 105 035 025
- CN-A- 105 096 528
- CN-A- 107 215 307
- CN-A- 109 583 174
- CN-A- 110 598 734
- CN-A- 111 071 187
- DE-A1- 102018 211 609
- JP-A- 2007 237 770
- US-A1- 2015 091 713
- US-A1- 2021 229 674
- US-B1- 10 369 966

## Description

This application claims priority to Chinese Patent Application No. 202111013038.9, filed with the China National Intellectual Property Administration on August 31, 2021 and entitled "IDENTITY AUTHENTICATION METHOD AND VEHICLE"

### TECHNICAL FIELD

This application relates to the field of information security technologies, and in particular, to an identity authentication method and a vehicle.

### BACKGROUND

Currently, common manners in which a vehicle performs authentication on a user identity include, for example, password authentication and biological feature authentication. The biological feature authentication is, for example, facial authentication, fingerprint authentication, and voiceprint authentication. However, these authentication manners require cooperation of a user. If these authentication manners are used to perform the authentication on the user in a vehicle-mounted scenario, interference is caused to the user driving the vehicle. In addition, it is difficult for the biological feature authentication to adapt to a changeable environment and a change of a human body in a driving process, authentication performance is unstable, and accuracy of an authentication result is affected. For example, in the driving process, factors such as the vehicle entering or exiting a tunnel and a weather change cause a great change in a lighting environment. Collected facial data is susceptible to lighting. As a result, accuracy of a facial authentication result is low, and even the authentication cannot be completed.

US 2015/0091713 A1 discloses systems and methods for vehicle theft detection. In an embodiment, a driver of the vehicle is identified with an onboard system. The onboard system then determines whether the driver is an authorized operator of the vehicle, where the determination based on sensor data collected from a sensor installed in the vehicle. When the driver is not an authorized operator of the vehicle, a security recovery process is performed.

CN 107215307 A discloses a driver identity identification method and system based on vehicle sensor calibration data. The method comprises the steps that vehicle sensor data is obtained and calibration is conducted, so that the sensor data is mapped to a vehicle motion coordinate system from a sensor tri-axial acceleration coordinate system to eliminate the effect on the subsequent recognition processes from the sensor installation error; extraction of statistical features is conducted on the calibrated sensor data, a feature vector capable of characterizing individual driving habits is obtained and inputted into a neural network trained beforehand, and identity identification results can be outputted, wherein the training of the neural network is a process conducted using identity data inputted beforehand as a training set for output and the statistical features of the sensor data as the training set for input.

### SUMMARY

Embodiments of this application disclose an identity authentication method and a vehicle, so that authentication on an identity of a user can be performed in a vehicle-mounted scenario based on a driving feature, the driving feature can well adapt to the vehicle-mounted scenario, authentication performance is stable, no interference is caused to the user driving the vehicle, and availability is high.

According to the invention, its embodiment provides an identity authentication method, applied to a vehicle. The method includes: performing authentication on a user identity in a first authentication manner; enabling permission to use a first function of the vehicle when the authentication performed on the user identity in the first authentication manner succeeds; collecting first driving data of a user; classifying the first driving data based on a plurality of obtained driving scenarios, to obtain second driving data, and performing the authentication on the user identity based on the second driving data, where the first authentication manner is a manner in which the authentication is not performed on the user identity based on the second driving data; disabling the permission to use the first function when the authentication performed on the user identity based on the second driving data fails; and keeping the permission to use the first function enabled when the authentication performed on the user identity based on the second driving data succeeds.

For example, the first authentication manner is, for example, but is not limited to, vehicle key authentication, password authentication, biological feature authentication, PIN code authentication, or connected device authentication. It may be understood that an individual identification degree of the first authentication manner is higher than that of the foregoing manner in which the authentication on the user identity is performed based on the second driving data.

Optionally, the first function may be all functions of the vehicle. Optionally, the first function may be some functions of the vehicle. The first function includes, for example, but is not limited to, adjusting components such as a seat, a rearview mirror, and a seat belt, operating driving components such as a steering wheel, a gear shifter, an accelerator, and a brake, and using functions such as navigation, music, and personal information viewing on a vehicle-mounted computer.

In this application, after the authentication on the user identity is performed in the first authentication manner, the authentication on the user identity may be subsequently performed based on the driving data (referred to as driving feature authentication for short). The driving feature authentication can well adapt to a vehicle-mounted scenario, has high authentication stability, and does not cause interference to the user driving the vehicle. The first authentication manner and the driving feature authentication are combined for the authentication on the user identity in the vehicle-mounted scenario, and accuracy of an authentication result is high.

In a possible implementation, the method further includes: enabling the first function when the authentication performed on the user identity in the first authentication manner succeeds.

In a possible implementation, the method further includes: receiving a first user operation when the permission to use the first function is enabled; and enabling the first function in response to the first user operation.

In a possible implementation, the disabling the permission to use the first function when the authentication performed on the user identity based on the second driving data fails includes: performing the authentication on the user identity in the first authentication manner when the authentication performed on the user identity based on the second driving data fails; and disabling the permission to use the first function when the authentication performed on the user identity in the first authentication manner fails.

In this application, when the authentication performed on the user identity based on the driving data fails, the authentication on the user identity may be performed in the first authentication manner with a high individual identification degree. When the authentication fails, the permission to use the first function is disabled, to avoid a case in which driving feature authentication is misidentified, further enhance accuracy of the authentication, and reduce impact on vehicle driving safety.

In a possible implementation, the performing the authentication on the user identity in the first authentication manner when the authentication performed on the user identity based on the second driving data fails includes: outputting first information when the authentication performed on the user identity based on the second driving data fails, where the first information is used to prompt the user to perform the identity authentication; receiving a second user operation; and performing the authentication on the user identity in the first authentication manner in response to the second user operation.

In this application, when the authentication performed on the user identity based on the driving data fails, the user may be prompted to perform the authentication again. The user may select a proper occasion (for example, time when the vehicle stops at a red light), and then enter the user operation to perform the identity authentication, thereby reducing interference to the user driving the vehicle.

In a possible implementation, the disabling the permission to use the first function when the authentication performed on the user identity based on the second driving data fails includes: outputting second information when the authentication performed on the user identity based on the second driving data fails, where the second information is used to prompt the user to perform the identity authentication; and disabling the permission to use the first function if no third user operation is received or a fourth user operation is received within a first period of time, where the third user operation is used to perform the identity authentication, and the fourth user operation is used to cancel the identity authentication.

In this application, when the authentication performed on the user identity based on the driving data fails, the user may be prompted to perform the authentication again. If the user does not perform the identity authentication, the permission to use the first function is disabled, thereby reducing impact on vehicle driving safety.

In a possible implementation, before the disabling the permission to use the first function, the method further includes: disabling a permission to use a second function of the vehicle when the authentication performed on the user identity based on the second driving data fails, where the second function is different from the first function.

Optionally, a range of the first function may be wider than a range of the second function.

Optionally, the first function includes a function of operating a driving component of the vehicle and a navigation function, and the second function does not include the function of operating the driving component of the vehicle and the navigation function. Optionally, the second function includes a function of operating a component other than a driving component like a seat or a rearview mirror.

Optionally, the first function includes a function of viewing personal information, and the second function does not include the function of viewing the personal information.

In this application, when the authentication performed on the user identity based on the driving data fails, the vehicle may first disable the permission to use the second function, and when the subsequent authentication in the first authentication manner fails, or the user does not perform the authentication in the first authentication manner, further disable the permission to use the first function, thereby reducing impact on vehicle driving safety.

In a possible implementation, the method further includes: when the authentication performed on the user identity based on the second driving data fails, disabling a second function of the vehicle, and performing the authentication on the user identity in the first authentication manner, where the second function is different from the first function; and enabling permission to use the second function when the authentication performed on the user identity in the first authentication manner succeeds.

In this application, when the authentication performed on the user identity based on the driving data fails, the vehicle may first disable the permission to use the second function instead of directly disabling the permission to use the first function, thereby reducing impact on vehicle driving safety. When the subsequent authentication in the first authentication manner succeeds, the permission to use the first function is enabled, to avoid a case in which driving feature authentication is misidentified, and further enhance accuracy of the authentication.

In this application, a case in which there is a high probability that driving data in different driving scenarios may be different is fully considered. The collected driving data is first classified and then the authentication on the user identity is performed, to improve accuracy of the authentication.

In a possible implementation, the performing the authentication on the user identity based on the second driving data includes: performing feature extraction based on the second driving data and according to an obtained reference driving policy, to obtain a first driving feature, where the reference driving policy is used to implement a driving process of the vehicle, and the first driving feature includes information indicating a difference between the second driving data and the reference driving policy; and performing the authentication on the user identity based on the first driving feature.

Optionally, the reference driving policy may include a driving route and driving manner information, and may be used to implement self-driving.

In this application, the difference between the driving data and the reference driving policy can be compared, a one-dimensional analyzable user feature can be added, an individual identification degree of driving feature authentication is enhanced, and accuracy of the authentication is improved.

In a possible implementation, the performing the authentication on the user identity based on the second driving data includes: performing the authentication on the user identity based on the second driving data and a driving feature template of the user; and before the performing the authentication on the user identity based on the second driving data, the method further includes: receiving third driving data of the user sent by a first device; and determining the driving feature template of the user based on the third driving data.

In this application, the driving feature template used to perform the authentication on the user identity may be determined by the vehicle based on the third driving data received from the connected first device, and the vehicle does not need to independently collect the driving data. This reduces steps and time of registering the driving feature template, and is fast.

In a possible implementation, before the determining the driving feature template of the user based on the third driving data, the method further includes: collecting fourth driving data of the user; and the determining the driving feature template of the user based on the third driving data includes: determining the driving feature template of the user based on the third driving data and the fourth driving data.

In this application, the driving feature template used to perform the authentication on the user identity may be determined by the vehicle based on the third driving data sent by the first device and the fourth driving data independently collected by the vehicle. The driving feature template meets an actual situation, and accuracy of the authentication is high.

In a possible implementation, the method further includes: performing the authentication on the user identity in the first authentication manner when the authentication performed on the user identity based on the second driving data fails; and updating the driving feature template of the user based on the second driving data when the authentication performed on the user identity in the first authentication manner succeeds.

In this application, when the authentication performed on the user identity based on the driving data fails, but the authentication in the first authentication manner with a high individual identification degree succeeds, the vehicle may update the driving feature template based on the driving data. The driving feature template conforms to a driving habit of the user, and accuracy of driving feature authentication is improved.

In a possible implementation, the method further includes: updating the driving feature template of the user based on the second driving data when the authentication performed on the user identity based on the second driving data succeeds.

In this application, when the authentication performed on the user identity based on the driving data succeeds, the vehicle may update the driving feature template based on the driving data. The driving feature template conforms to a driving habit of the user, and accuracy of driving feature authentication is improved.

In a possible implementation, the method further includes: sending first indication information to a second device when the authentication performed on the user identity based on the second driving data fails, where the first indication information indicates that the authentication on the user identity fails, and the second device is configured to perform the authentication on the user identity after receiving the first indication information; or sending second indication information to the second device when the authentication performed on the user identity based on the second driving data succeeds, where the second indication information indicates that the authentication on the user identity succeeds, and the second device is configured to enable permission to use a third function of the second device when receiving the second indication information.

In this application, an authentication result obtained by performing the authentication on the user identity by the vehicle may be sent to another connected device, thereby reducing steps of performing the authentication by the another device.

In a possible implementation, the first authentication manner is facial authentication or voiceprint authentication.

In this application, the first authentication manner may be the facial authentication or the voiceprint authentication with a high individual identification degree and small interference to the user. In this way, accuracy of the authentication is ensured, the interference to the user driving the vehicle is reduced, and availability is high.

According to a second aspect, an embodiment of this application provides a vehicle, including a transceiver, a processor, and a memory. The memory is configured to store a computer program, and the processor invokes the computer program to perform the identity authentication method according to the first aspect and any one of the implementations of the first aspect of embodiments of this application.

### BRIEF DESCRIPTION OF DRAWINGS

The following describes accompanying drawings used in embodiments of this application.
FIG. 1A and FIG. 1B are a schematic diagram of a structure of a vehicle according to an embodiment of this application;
FIG. 2 and FIG. 3 are schematic flowcharts of registering a driving feature according to embodiments of this application;
FIG. 4 is a schematic flowchart of updating a driving feature template according to an embodiment of this application;
FIG. 5 is a schematic flowchart of a feature extraction process according to an embodiment of this application;
FIG. 6 to FIG. 8 are schematic flowcharts of some identity authentication methods according to embodiments of this application;
FIG. 9A-1 and FIG. 9A-2 to FIG. 9H-1 and FIG. 9H-2 are schematic diagrams of some user interface embodiments according to embodiments of this application; and

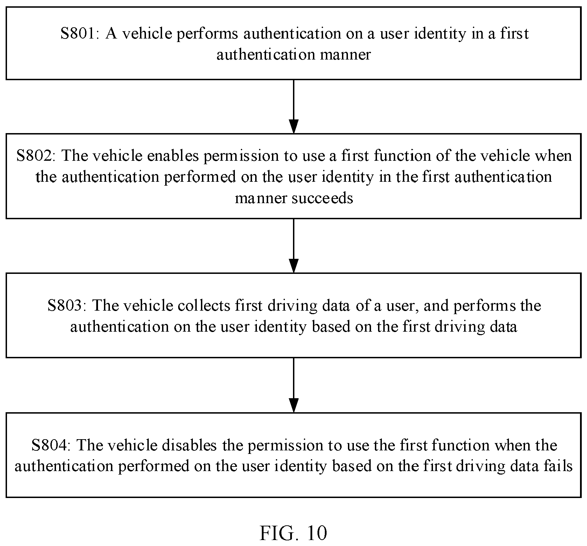

FIG. 10 is a schematic flowchart of another identity authentication method according to an embodiment of this application.

### DESCRIPTION OF EMBODIMENTS

The following clearly describes technical solutions in embodiments of this application in detail with reference to accompanying drawings. Terms used in embodiments of this application are merely used to explain specific embodiments of this application, but are not intended to limit this application.

A vehicle in this application may be, but is not limited to, a car, a truck, a motorcycle, a bus, a boat, an airplane, a helicopter, a mower, a recreational vehicle, a playground vehicle, construction equipment, a tram, a golf cart, a train, a trolley, or the like.

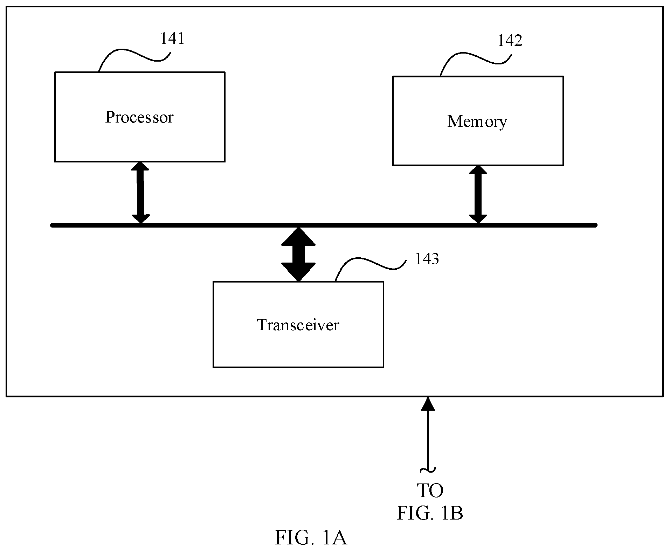

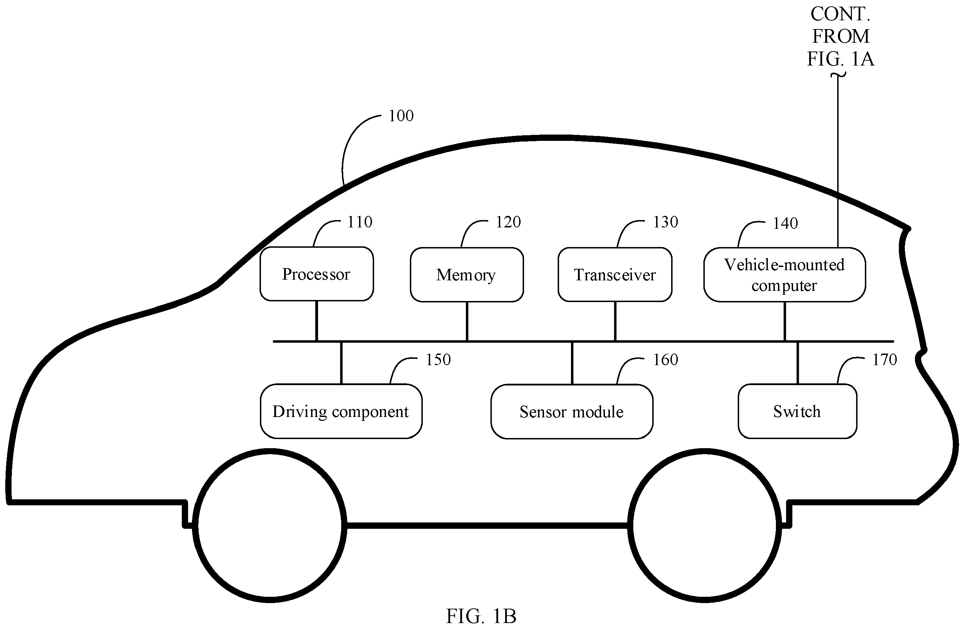

FIG. 1A and FIG. 1B are a schematic diagram of a structure of a vehicle according to an embodiment of this application.

As shown in FIG. 1A and FIG. 1B, a vehicle 100 may include modules such as a processor 110, a memory 120, a transceiver 130, a vehicle-mounted computer 140, a driving component 150, a sensor module 160, and a switch 170. At least one module of the vehicle 100 may be interconnected in a wired or wireless manner, for example, interconnected through a bus.

The processor 110 may be one or more central processing units (central processing unit, CPU). When the processor 110 is one CPU, the CPU may be a single-core CPU, or may be a multicore CPU. Different processing units may be independent components, or may be integrated into one or more processors.

The memory 120 may include but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 120 is configured to store a related computer program and information. In some embodiments, the memory 120 is configured to store at least one of the following: driving behavior data, a driving feature, a driving feature template, or another identity template like a biological feature template.

The transceiver 130 is configured to receive and/or send data. In some embodiments, the transceiver 130 is configured to communicate with a network and another device by using a wireless communication technology. The wireless communication technology may include but is not limited to a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), new radio (new radio, NR) access, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

In some embodiments, the vehicle 100 may communicate with a server by using the transceiver 130. The server may be one server, or may be a server cluster including a plurality of servers. The server may be a hardware server, or may be a cloud server. For example, the vehicle 100 obtains at least one of the following from the server through the NR: the driving behavior data, the driving feature, the driving feature template, and the like.

In some embodiments, the vehicle 100 may communicate with a terminal device by using the transceiver 130. The terminal device is, for example, but is not limited to, a mobile phone, a tablet computer, a handheld computer, a smart band, a smart watch, smart glasses, a notebook computer, or a netbook. For example, the vehicle 100 may send an identity authentication result to the terminal device through the Bluetooth, so that the terminal device identifies a user identity based on the received identity authentication result.

The vehicle-mounted computer 140 may provide a manner in which a user interacts with the vehicle 100. In some embodiments, the vehicle-mounted computer 140 may provide information for a user who enters a cockpit of the vehicle 100. For example, the vehicle-mounted computer 140 displays information on a display, or the vehicle-mounted computer 140 plays information by using a speaker. In some embodiments, the vehicle-mounted computer 140 may receive a user operation. For example, the vehicle-mounted computer 140 receives a touch operation of the user by using a touch sensor (for example, a touch sensor disposed on the display). For another example, the vehicle-mounted computer 140 receives a voice input of the user by using a microphone.

In some embodiments, the vehicle-mounted computer 140 may provide various multimedia services for the user, for example, functions such as in-vehicle internet access, audio and video entertainment, positioning and navigation, game playing, and phone making.

In some embodiments, the vehicle-mounted computer 140 may include a processor 141, a memory 142, and a transceiver 143. Specific descriptions are similar to those of the processor 110, the memory 120, and the transceiver 130. Details are not described again. In addition, the vehicle-mounted computer 140 may further include other devices, for example, the display, the speaker, the microphone, the touch sensor, and a fingerprint sensor configured to collect a fingerprint. A quantity of other devices and a type are not limited in this application. The other devices may be integrated into the vehicle-mounted computer 140, or may be connected to the vehicle-mounted computer 140 in a wired or wireless manner. A specific structure of the vehicle-mounted computer 140 is not limited in this application.

The driving component 150 may provide a manner in which the user operates the vehicle 100, for example, a manner in which the user drives the vehicle 100. The driving component 150 may include but is not limited to at least one of the following: a steering wheel, a brake, an accelerator, a clutch, a gear shifter, and the like.

In some embodiments, the sensor module 160 may include at least one sensor that senses information about a surrounding environment of the vehicle 100, for example, but is not limited to including a positioning sensor, an inertial measurement unit (inertial measurement unit, IMU), a lidar, a camera, front and rear radars, and a left rear wheel sensor. In some embodiments, the sensor module 160 may include a sensor that obtains the driving behavior data, for example, a sensor configured to obtain driving behavior data related to the steering wheel, a sensor configured to obtain driving behavior data related to the brake, the accelerator, and the clutch, or a sensor configured to obtain a vehicle speed and a vehicle distance. In some embodiments, the sensor module 160 may include sensors that monitor an internal system of the vehicle 100, for example, an in-vehicle air quality monitor, a fuel gauge, and an oil temperature gauge. Sensor data from one or more of these sensors of the sensor module 160 can be used to detect an object and corresponding features (a position, a shape, a direction, a speed, and the like) of the object.

The positioning sensor may be configured to measure a geographical position of the vehicle 100. The positioning sensor is, for example, a GPS, and is not limited thereto. The positioning sensor may alternatively be a BDS or another positioning sensor.

The IMU is configured to sense a position and an orientation change of the vehicle 100 based on an inertial acceleration. In some embodiments, the IMU may be a combination of an accelerometer and a gyro. For example, the IMU may be configured to measure a curvature of the vehicle 100.

The lidar may use laser light to sense an object in the surrounding environment of the vehicle 100, and in some embodiments, the lidar includes one or more laser sources, a laser scanner, one or more detectors, and another system component. In some embodiments, the lidar may be configured to sense a speed and/or an advancing direction of the object. In some embodiments, a result obtained by the lidar may be presented in a three-dimensional (3-dimension, 3D) map manner. In addition, the lidar may alternatively be another radar that performs sensing based on a radio signal or another signal. This is not limited in this application.

The camera is configured to capture a plurality of images of the surrounding environment of the vehicle 100. The camera may capture a static image or a dynamic image (namely, a video). In some embodiments, the camera is disposed near a rearview mirror of the vehicle 100, and may be configured to identify a traffic signal light. Optionally, the processor 110 or the processor 141 in the vehicle-mounted computer 140 may identify, based on the image captured by the camera, a moving object, for example, another vehicle or a pedestrian around.

The front and rear radars may measure distances between the vehicle 100 and objects located in front, rear, left, and right directions, and in some embodiments, the distances between the vehicle 100 and the surrounding objects may be measured by using the front and rear radars and the camera.

The left rear wheel sensor may also be referred to as a position sensor, and may be configured to measure lateral movement of the vehicle 100, for example, to determine a position of the vehicle 100 on a road.

The switch 170 may include at least one switch that can be accessed by the user when using the vehicle 100, for example, a vehicle door switch, a vehicle window switch, a vehicle startup switch, and a turn signal switch. After the vehicle startup switch is turned on, the user can drive the vehicle 100. The vehicle startup switch can be understood as a main switch of the driving components such as the brake, the accelerator, the clutch, and the gear shifter.

In some embodiments, the vehicle 100 may include a self-driving system, and the self-driving system includes the vehicle-mounted computer 140 and the sensor module 160. Optionally, the self-driving system may be an intelligent vehicle system that implements self-driving by using the vehicle-mounted computer 140 and may obtain, by using the sensor module 160 (for example, the camera, the radar, and the left rear wheel sensor), an environment parameter that includes, for example, but is not limited to, a current position of the vehicle, a status of a surrounding object, and a road condition such as traffic signal lights. Optionally, the self-driving system may obtain a map and a reference driving policy based on the obtained environment parameter, and then perform navigation and driving based on the obtained map and according to the obtained reference driving policy. Optionally, the reference driving policy is used to implement a driving process of the vehicle. Optionally, the reference driving policy may include but is not limited to a driving route and/or a driving manner. Optionally, the driving manner may be represented by the obtained driving behavior data and/or the obtained driving feature. For descriptions of the driving behavior data and the driving feature, refer to descriptions of driving behavior data and a driving feature in the following embodiments. Details are not described temporarily. Optionally, the self-driving system may identify a driving scenario based on the obtained environment parameter. The driving scenario includes, for example, but is not limited to, at least one of the following: a straight road and the road is not congested, a straight road and the road is congested (for example, a vehicle following situation exists), and a 180-degree left-turn lane, a 180-degree right-turn lane, an S-shaped curve, uphill startup, an intersection with traffic signal lights, a 90-degree curve at an intersection, and a highway. Optionally, the self-driving system may identify, based on the obtained environment parameter, whether a current scenario is a preset scenario. Optionally, the preset scenario may be a preset scenario in the identified driving scenario.

In addition, in some other embodiments, an operation performed by the vehicle-mounted computer 140 in the self-driving system may alternatively be performed by the processor 110. The self-driving system may include only the processor 110 and does not include the vehicle-mounted computer 140. A specific structure of the self-driving system is not limited in this application.

In some other embodiments, one or more of the foregoing example modules may be installed separately from or connected to the vehicle 100. For example, the memory 120 may be partially or completely separated from the vehicle 100.

In addition to the foregoing example modules, in some other embodiments, the foregoing example modules may be added or deleted based on an actual requirement. FIG. 1A and FIG. 1B should not be understood as a limitation on embodiments of this application.

It may be understood that the schematic diagram of the structure of the vehicle shown in FIG. 1A and FIG. 1B is merely an example implementation in embodiments of this application. The vehicle in embodiments of this application includes but is not limited to the foregoing structure.

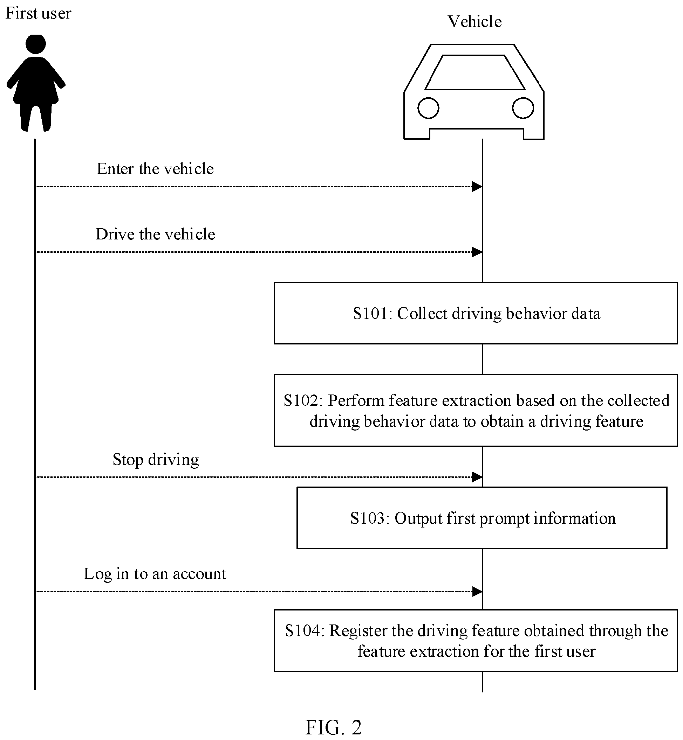

The processor 110 in the vehicle 100 is configured to: read computer program code stored in the memory 120, and perform procedures shown in FIG. 2 to FIG. 8 and FIG. 10.

Currently, common authentication manners in which a vehicle performs authentication on a user identity include, for example, but are not limited to, vehicle key authentication, password authentication, PIN code authentication, connected device authentication, and biological feature authentication. The biological feature authentication includes, for example, but is not limited to, facial authentication, fingerprint authentication, and voiceprint authentication. Details are as follows:

The vehicle key authentication may be understood as authentication performed on a vehicle key. A user holding a correct vehicle key is an authorized user, and the authorized user can normally use the vehicle. For example, a person holding the correct vehicle key can open and lock a vehicle door and start the vehicle. The vehicle key may include a physical vehicle key and an electronic vehicle key. For example, the electronic vehicle key may be implemented by using a terminal like a mobile phone.

The password authentication may be understood as authentication performed on a password. If a user enters a correct password, the user is the authorized user. Optionally, the user may enter the password on a vehicle-mounted computer of the vehicle. Optionally, the user may enter the password on another part of the vehicle, for example, enter the password on a vehicle door when the vehicle door is opened. Optionally, the user may enter the password by using another device (for example, a terminal device) connected to the vehicle. The vehicle may receive, from the another device, the password entered by the user. The another device is, for example, a device connected to the vehicle in a near field communication manner like Bluetooth, NFC, or infrared.

The PIN code authentication may be understood as authentication performed on a PIN code. When a PIN code entered by a user is correct, the user is the authorized user. The PIN code may also be referred to as a verification code and usually includes a plurality of digital characters, for example, a 6-digit PIN code.

The connected device authentication may be understood as authentication performed on information obtained from another device (for example, a terminal device) connected to the vehicle. When the information obtained from the another device is correct, a current user is the authorized user. The another device is, for example, a device connected to the vehicle in a near field communication manner like Bluetooth, NFC, or infrared. The information obtained from the another device includes, for example, but is not limited to, a device identifier like a Bluetooth address of the another device, or an authentication factor obtained by the another device. The authentication factor includes, for example, but is not limited to, a password, a PIN code, and biological features such as facial information and voiceprint information.

The biological feature authentication may be understood as authentication performed on a biological feature. When an obtained biological feature of a user is correct, the user is the authorized user, and the biological feature includes, for example, but is not limited to, facial information, fingerprint information, and voiceprint information.

In some embodiments, the authentication performed on the user identity usually includes a registration process and an authentication process. In some embodiments, the registration process may include obtaining an authentication factor, and storing the authentication factor as an identity template. For example, a process of registering a biological feature specifically includes: collecting a biological feature of a user, and storing the biological feature as a biological feature template of the user. The authentication process may include obtaining an authentication factor, comparing the obtained authentication factor with the stored identity template, and determining that a user is a registered authorized user if a similarity degree is greater than or equal to a preset threshold; otherwise, determining that the user is not the authorized user. For example, during the facial authentication, the vehicle may collect a facial feature of a user by using a camera. During the fingerprint authentication, the vehicle may collect fingerprint information of a user by using a fingerprint sensor. During the voiceprint authentication, the vehicle may collect voiceprint information of a user by using a microphone or another sound sensor. Optionally, the voiceprint information may be collected when the vehicle-mounted computer and the user perform voice interaction (for example, the user sends a voice instruction), and the user does not need to actively cooperate.

In some embodiments, when the authentication of the vehicle on the user identity in the foregoing manner succeeds, the vehicle may determine that the user is the authorized user. The authorized user can normally use the vehicle, including, for example, but is not limited to, adjusting components such as a seat, a rearview mirror, and a seat belt, operating driving components such as a steering wheel, a gear shifter, an accelerator, and a brake, and using functions such as navigation, music, and personal information viewing on the vehicle-mounted computer.

However, these authentication manners have some drawbacks. For example, the vehicle key used for the vehicle key authentication may be lent to another person, lost, forged, or the like. The password used for the password authentication may be stolen, and the input operation may cause interference to the user driving the vehicle. The biological feature authentication requires cooperation of the user. If the biological feature authentication is used to perform authentication on a user identity in a driving process, interference is caused to the user driving the vehicle. In addition, it is difficult for the biological feature authentication to adapt to a changeable environment and a change of a human body in the driving process, authentication performance is unstable, and accuracy of an authentication result is affected. For example, factors such as the vehicle entering or exiting a tunnel and a weather change cause a great change in a lighting environment, and a facial feature obtained based on a captured image is susceptible to lighting. For another example, a hand of the user feels sweaty, and collected fingerprint information may be inaccurate. For another example, during vehicle driving, there may be wind noise, engine noise, music played by the user, and sound made by a passenger chatting. Collected voice information includes a large amount of noise. As a result, voiceprint of the user cannot be accurately extracted.

Embodiments of this application provide an identity authentication method, applied to a vehicle. The vehicle may obtain a driving feature of a user, and the driving feature is obtained based on driving behavior data of the user when the user drives the vehicle. The vehicle may perform authentication on the user based on the driving feature, and the authentication is imperceptible to the user and does not cause interference to the user driving the vehicle. In addition, the driving feature does not change due to factors such as light and noise in a driving process, and can well adapt to a changeable environment in the driving process, and authentication stability is high.

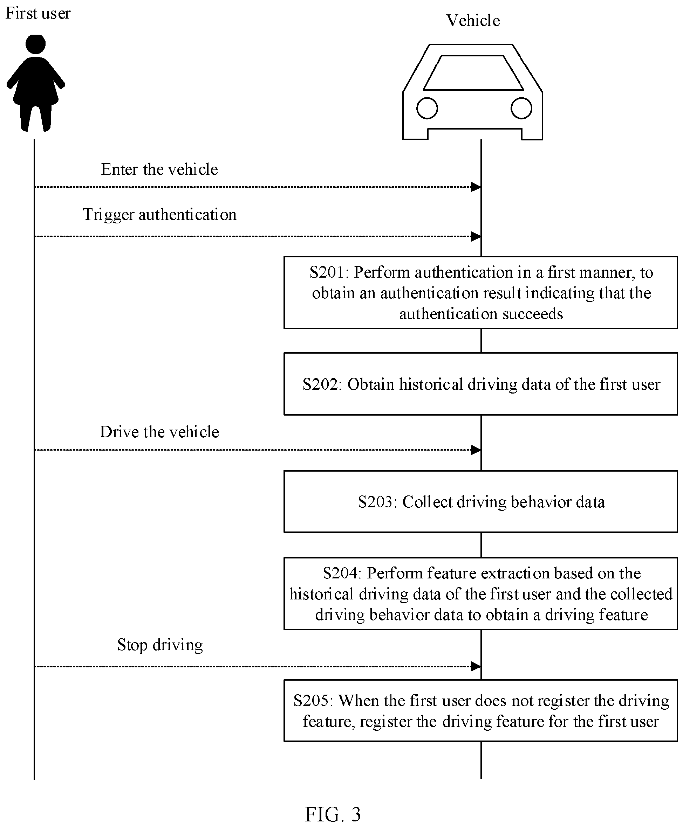

In some embodiments, the vehicle may register a driving feature, that is, obtain a driving feature of a user and store the driving feature as a driving feature template of the user. The stored driving feature template (which may also be referred to as a registered driving feature template) is used to implement identity authentication based on the driving feature. A specific example is shown in FIG. 2 and FIG. 3.

FIG. 2 is an example of a schematic flowchart of registering a driving feature. A vehicle in FIG. 2 may be the vehicle 100 shown in FIG. 1A and FIG. 1B. A process of registering the driving feature may include but is not limited to the following steps.

S101: The vehicle collects driving behavior data.

Specifically, the driving behavior data includes, for example, but is not limited to, a posture of holding a steering wheel by a hand, a contact area and a contact position between a palm and the steering wheel, a manner in which the steering wheel is operated (for example, a direction, a speed, a rotation angle, pressure, and a timestamp), a manner in which a brake, an accelerator, or a clutch is stepped on (for example, a speed, pressure, a depth, and a timestamp), timing of operating a turn signal, a manner in which a gear shifter is operated (for example, timing and a manner in which a gear shifting handle is pushed), a position on a road, a lane on which the vehicle drives, a distance from an adjacent vehicle, a driving speed, a manner in which a vehicle door is opened or closed (for example, timing and force), a manner in which a seat belt is fastened (for example, timing and a length), a seat status (for example, a height), and a rearview mirror status (for example, an angle).

In some embodiments, after a user enters the vehicle, the vehicle collects the driving behavior data. For example, after the vehicle door is closed after being opened, the vehicle determines that the user enters the vehicle. For another example, when the seat belt is in a fastened state, the vehicle determines that the user enters the vehicle. For another example, when a pressure sensor disposed in a seat senses pressure, the vehicle determines that the user enters the vehicle. For another example, when a status of a component like the rearview mirror or the seat changes (that is, when the user adjusts the component), the vehicle determines that the user enters the vehicle.

In some embodiments, the vehicle collects the driving behavior data when the user starts driving the vehicle. Optionally, the vehicle may determine, based on a vehicle speed, whether the user drives the vehicle. For example, when the vehicle speed increases from 0, the vehicle determines that the user starts driving the vehicle, and when the vehicle speed decreases to 0, the vehicle determines that the user stops driving the vehicle. This is not limited thereto. The vehicle may further determine, based on a status of an included module (for example, an engine and an accelerator), whether the user drives the vehicle. This is not limited in this application.

In some embodiments, when a preset collection condition is met, the vehicle may collect the driving behavior data. The preset collection condition includes, for example, but is not limited to, identifying that a scenario is a first preset scenario and/or receiving a user operation. Optionally, the first preset scenario may be a preset scenario in a driving scenario obtained by the vehicle. Optionally, that driving behavior data of different users collected in the first preset scenario differs greatly may be understood as that accuracy of identifying a user identity based on the driving behavior data in the first preset scenario is high. Optionally, the vehicle may identify, based on an obtained environment parameter, whether a scenario is the first preset scenario. The environment parameter includes, for example, but is not limited to, a current position of the vehicle, a status of a surrounding object, a road condition such as traffic signal lights, and weather conditions such as whether it rains, whether it snows, and a wind scale.

In some embodiments, the vehicle may continuously collect the driving behavior data. In some other embodiments, the vehicle may periodically collect the driving behavior data. In some other embodiments, when the preset collection condition is met, the vehicle may collect the driving behavior data within a preset collection period of time.

In some embodiments, when the user manually operates the vehicle to drive, the vehicle collects the driving behavior data, but when the vehicle automatically drives without a user operation (which may be referred to as self-driving), the vehicle does not collect the driving behavior data.

In some embodiments, the driving behavior data collected by the vehicle may include driving behavior data respectively corresponding to a plurality of driving modes, for example, first driving behavior data in an economical mode, second driving behavior data in a sports mode, third driving behavior data in a normal mode, and fourth driving behavior data in a custom mode.

In some embodiments, the driving behavior data collected by the vehicle may include driving behavior data respectively corresponding to a plurality of driving scenarios. For example, in a scenario in which a road is straight and the road is not congested, a type of collected driving behavior data may include a driving speed, a position on the road, and the like. In a scenario in which a road is straight and the road is congested, a type of collected driving behavior data may include a distance from an adjacent vehicle, a manner in which a brake, an accelerator, or a clutch is stepped on, and the like.

S102: The vehicle performs feature extraction based on the collected driving behavior data to obtain a driving feature.

In some embodiments, the vehicle may perform the feature extraction on the collected driving behavior data at an interval of a preset extraction period of time. Optionally, the driving behavior data is periodically collected by the vehicle, and the preset extraction period of time may include at least one period during which the driving behavior data is collected. Optionally, the preset extraction period of time may include at least one preset collection period of time.

In some other embodiments, when a preset extraction condition is met, the vehicle may perform the feature extraction on the collected driving behavior data. Optionally, the preset extraction condition may include that the driving behavior data is collected when the preset collection condition is met. Optionally, the preset extraction condition may include that a data amount of the collected driving behavior data is greater than or equal to a first data amount. Optionally, the preset extraction condition may include that the user currently stops driving the vehicle.

S103: The vehicle outputs first prompt information.

S103 is an optional step.

In some embodiments, the first prompt information may be used to prompt the user to register the driving feature. For example, the first prompt information is character information, and the vehicle may output the first prompt information on a display. For a specific example, refer to prompt information 312 shown in an upper figure in FIG. 9A-1 and FIG. 9A-2 below. For another example, the first prompt information is audio information, and the vehicle may output the first prompt information by using a speaker. A form of the first prompt information is not limited in this application.

In some embodiments, the vehicle may output the first prompt information after the user stops driving. In some other embodiments, the vehicle may output the first prompt information when a preset output condition is met in a process in which the user drives the vehicle, for example, output the first prompt information when the vehicle speed is less than or equal to a preset vehicle speed. The preset output condition is not limited in this application.

S104: The vehicle registers the driving feature obtained through the feature extraction for a first user.

Specifically, after the vehicle identifies the first user, when the first user does not register the driving feature, the vehicle may register the driving feature obtained through the feature extraction for the first user, that is, store the driving feature obtained through the feature extraction as a driving feature template of the first user.

In some embodiments, that the vehicle identifies the first user may include that identity authentication is performed in a first manner, and an authentication result indicates that the authentication succeeds. The first manner is, for example, but is not limited to, vehicle key authentication, password authentication, biological feature authentication, PIN code authentication, or connected device authentication. For a specific authentication process, refer to the description of the foregoing common authentication manners.

In some embodiments, after outputting the first prompt information, the vehicle may receive a user operation used to trigger the identity authentication performed in the first manner. For example, the first prompt information is further used to prompt the user to log in to an account, and the vehicle may receive a touch operation (which can be understood as a user operation used to log in to the account) performed on a login control 312B in the upper figure in FIG. 9A-1 and FIG. 9A-2 below. In response to the user operation, the vehicle may perform the identity authentication on the current user in the first manner. When the authentication succeeds, the vehicle determines that the current user is an authorized user. This may also be understood as that the vehicle identifies the first user.

In some embodiments, after outputting the first prompt information, the vehicle may receive a user operation used to trigger identity registration performed in the first manner, for example, a touch operation (which can be understood as a user operation used to register an account) performed on a registration control 312C in the upper figure in FIG. 9A-1 and FIG. 9A-2below. In response to the user operation, the vehicle may register an identity template of the first user in the first manner. The identity template is used to implement the identity authentication based on the first manner. For example, an account and a password that are entered by the first user are received and stored as the identity template. The identity template is used to implement password authentication. In some embodiments, that the vehicle successfully registers the identity module of the first user in the first manner may be understood as that the vehicle identifies the first user. In some other embodiments, after registering the identity module of the first user in the first manner, the vehicle may perform authentication by using the stored identity template of the first user. When the authentication succeeds, the vehicle determines that the current user is the authorized user. This may also be understood as that the vehicle identifies the first user.

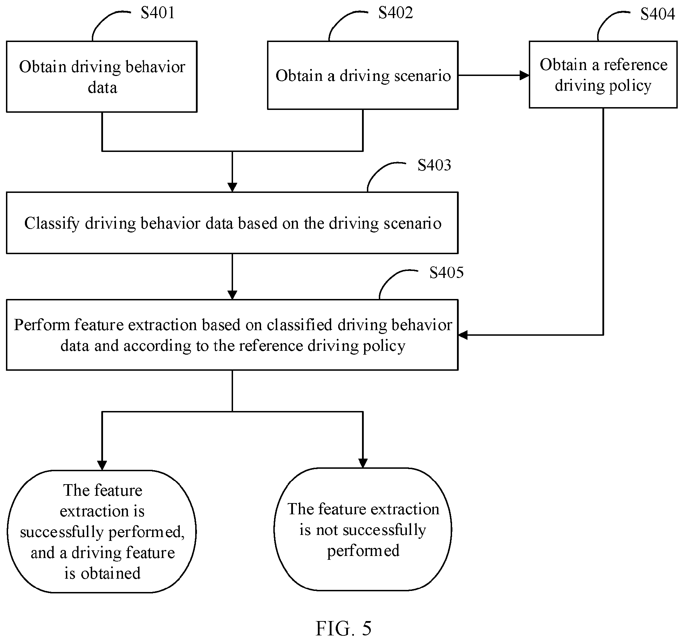

In addition to the foregoing example, in some other embodiments, after the user stops driving the vehicle, the collected driving behavior data is still insufficient to extract the driving feature. For example, the data amount of the collected driving behavior data is less than a second data amount. In this case, after identifying the first user, the vehicle stores historical driving data of the first user, where the historical driving data may include the collected driving behavior data, and/or intermediate data obtained when the feature extraction is performed based on the collected driving behavior data, and the intermediate data is data other than the collected driving behavior data and the driving feature, for example, classified driving behavior data in FIG. 5 below.

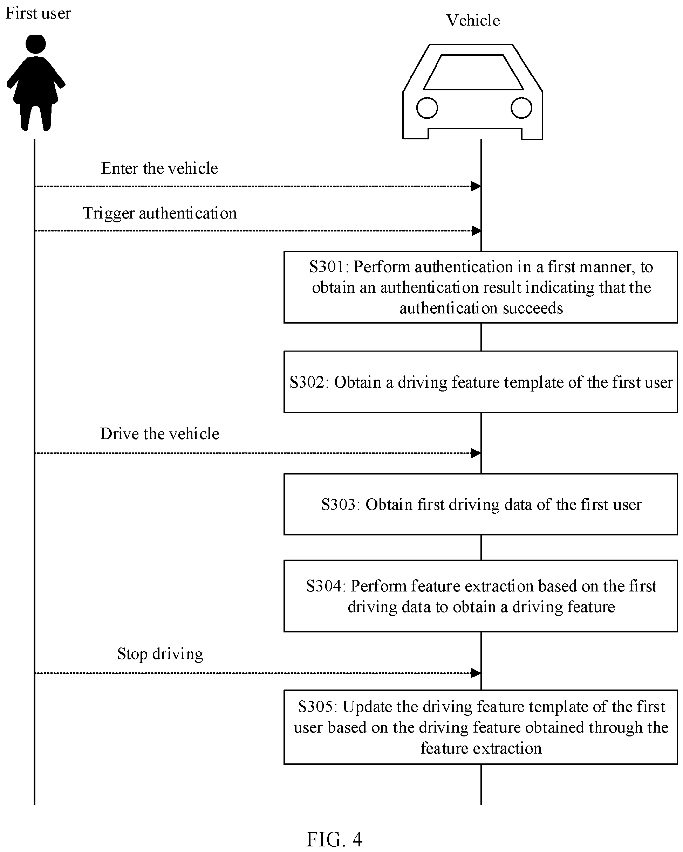

In addition to the foregoing example, in some other embodiments, after the vehicle identifies the first user, if the first user registers the driving feature template, the vehicle may update the driving feature template of the first user based on the obtained driving feature, for example, add the obtained driving feature to the driving feature template of the first user, or for another example, replace, with the obtained driving feature, a driving feature that is of a same type as the obtained driving feature and that is in the driving feature template of the first user. A specific example is shown in FIG. 4 below.

In some embodiments, the vehicle may first perform the authentication in the first manner to identify the first user, and then perform the feature extraction to obtain the driving feature, and register the driving feature for the first user. A specific example is shown in FIG. 3 below.

FIG. 3 is an example of another schematic flowchart of registering a driving feature. A vehicle in FIG. 3 may be the vehicle 100 shown in FIG. 1A and FIG. 1B. A process of registering the driving feature may include but is not limited to the following steps.

S201: The vehicle performs authentication in a first manner, to obtain an authentication result indicating that the authentication succeeds.

Specifically, for the first manner, refer to the description of the first manner in S104 in FIG. 2. In some other embodiments, when obtaining the authentication result indicating that the authentication succeeds, the vehicle may determine that a current user is an authorized user. This may also be understood as that the vehicle identifies a first user.

In some embodiments, after the first user enters the vehicle, the vehicle may perform the authentication in the first manner when determining to trigger identity authentication. In some embodiments, the vehicle may periodically trigger the identity authentication. In some other embodiments, the vehicle may trigger the identity authentication when identifying that a scenario is a second preset scenario. A description of the second preset scenario is similar to that of the first preset scenario in S 101 in FIG. 2. In some other embodiments, when receiving a user operation, the vehicle may determine to trigger the identity authentication. The user operation is, for example, an operation of closing a vehicle door, an operation of fastening a seat belt, an operation of starting the vehicle, such as stepping on an accelerator, starting a vehicle-mounted computer, accessing personal information such as an address and a contact on the vehicle-mounted computer, opening some applications on the vehicle-mounted computer, and performing operations such as performing small-amount payment. In some other embodiments, when receiving a request message (for example, a request message used to obtain the authentication result) sent by another connected device (for example, a terminal device), the vehicle may determine to trigger the identity authentication.

In some embodiments, when performing the authentication in the first manner, the vehicle may output prompt information, to prompt the user to perform the identity authentication, so that the user cooperates with the vehicle to perform the authentication in the first manner, thereby ensuring normal execution of the authentication.

In some embodiments, after obtaining the authentication result indicating that the authentication succeeds, the vehicle may determine whether the first user registers the driving feature, for example, determine whether a driving feature template of the first user is stored. In some embodiments, when determining that the first user registers the driving feature, the vehicle may perform feature extraction based on collected driving behavior data to obtain a driving feature, and then update the driving feature template of the first user based on the obtained driving feature. A specific example is shown in FIG. 4 below. In some other embodiments, when determining that the first user does not register the driving feature, the vehicle may perform the feature extraction based on the collected driving behavior data to obtain the driving feature, and then register the obtained driving feature for the first user. For example, S202 to S205 are performed.

S202: The vehicle obtains historical driving data of the first user.

Specifically, the historical driving data may include the driving behavior data, and/or intermediate data obtained during the feature extraction, where the intermediate data is data other than the driving behavior data and the driving features, for example, classified driving behavior data in FIG. 5 below.

In some embodiments, the vehicle may read the historical driving data of the first user from locally stored content. In some other embodiments, the vehicle may obtain the historical driving data of the first user from another device (for example, a server). Optionally, a vehicle corresponding to the obtained historical driving data of the first user may be different from the current vehicle.

S203: The vehicle collects the driving behavior data.

S203 is similar to S101 in FIG. 2. For details, refer to the description of S101 in FIG. 2.

S204: The vehicle performs feature extraction based on the historical driving data of the first user and the collected driving behavior data to obtain a driving feature.

S204 is similar to S102 in FIG. 2. A difference lies in that in S204, the vehicle performs the feature extraction further based on the historical driving data of the first user. For other descriptions, refer to the description of S102 in FIG. 2.

S205: When the first user does not register the driving feature, the vehicle registers the driving feature for the first user.

Specifically, when the first user does not register the driving feature, for example, when the vehicle does not store the driving feature template of the first user, the vehicle may register the driving feature obtained through the feature extraction for the first user, that is, store the driving feature obtained through the feature extraction as the driving feature template of the first user.

In some embodiments, the vehicle may register the driving feature for the first user after the user stops driving. In some other embodiments, the vehicle may register the driving feature for the first user when a preset registration condition is met in a process in which the user drives the vehicle. The preset registration condition is, for example, obtaining the driving feature, or for another example, a vehicle speed is less than or equal to a preset vehicle speed.

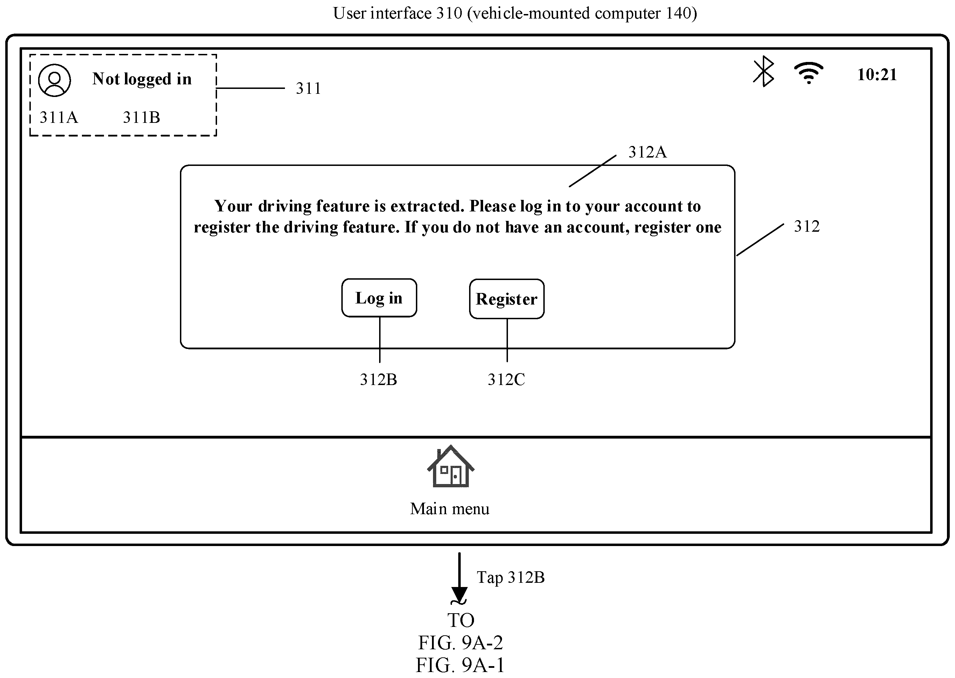

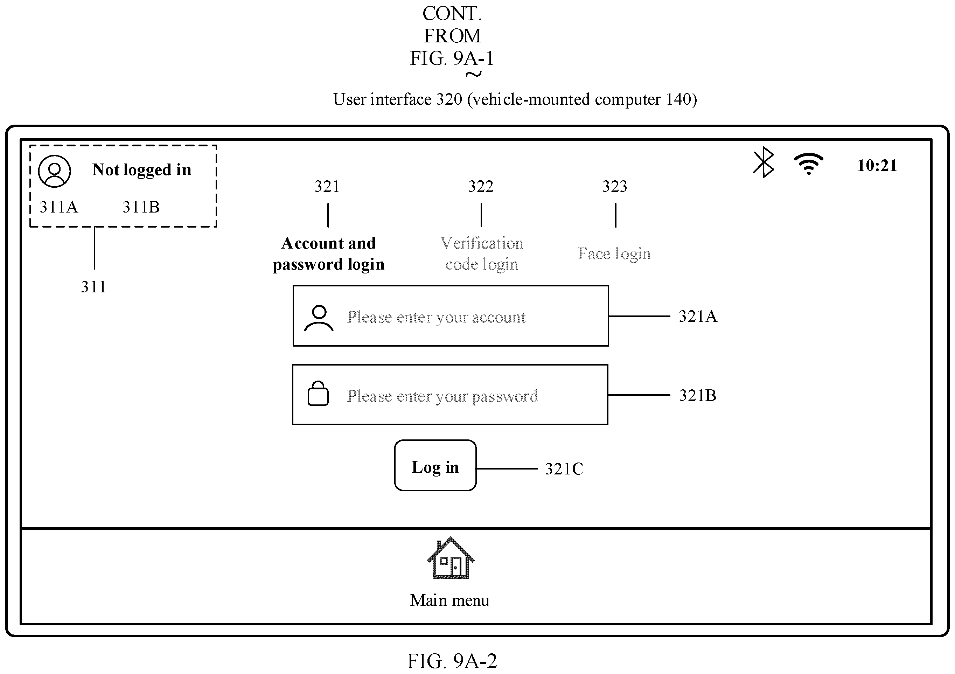

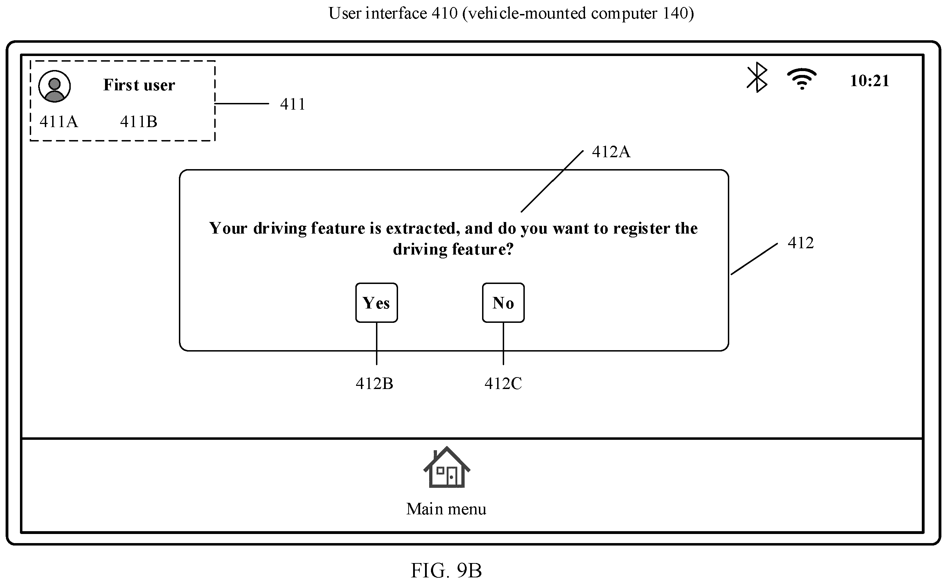

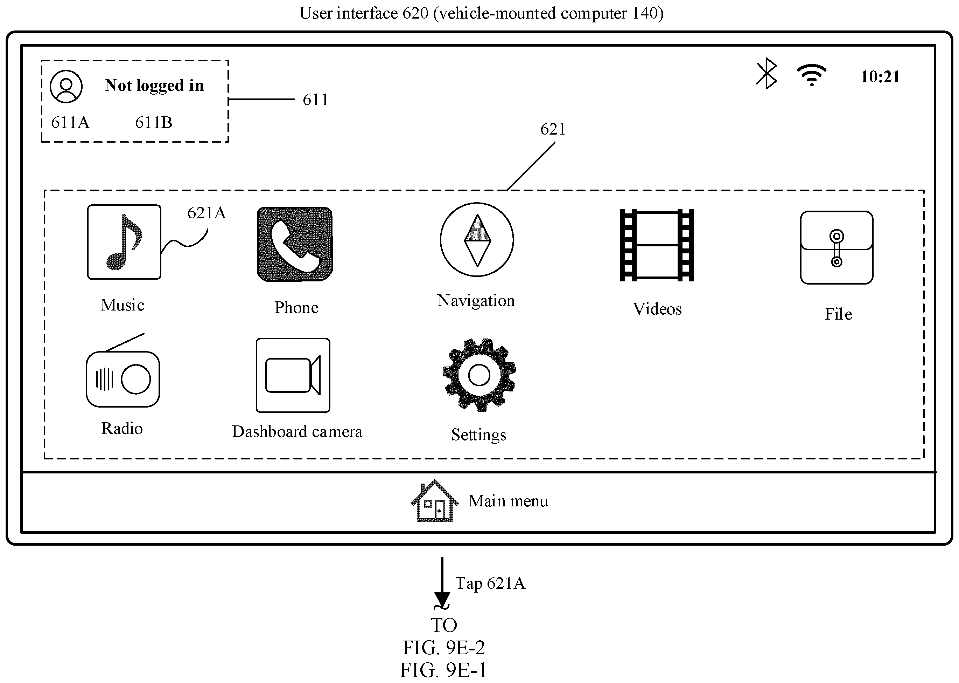

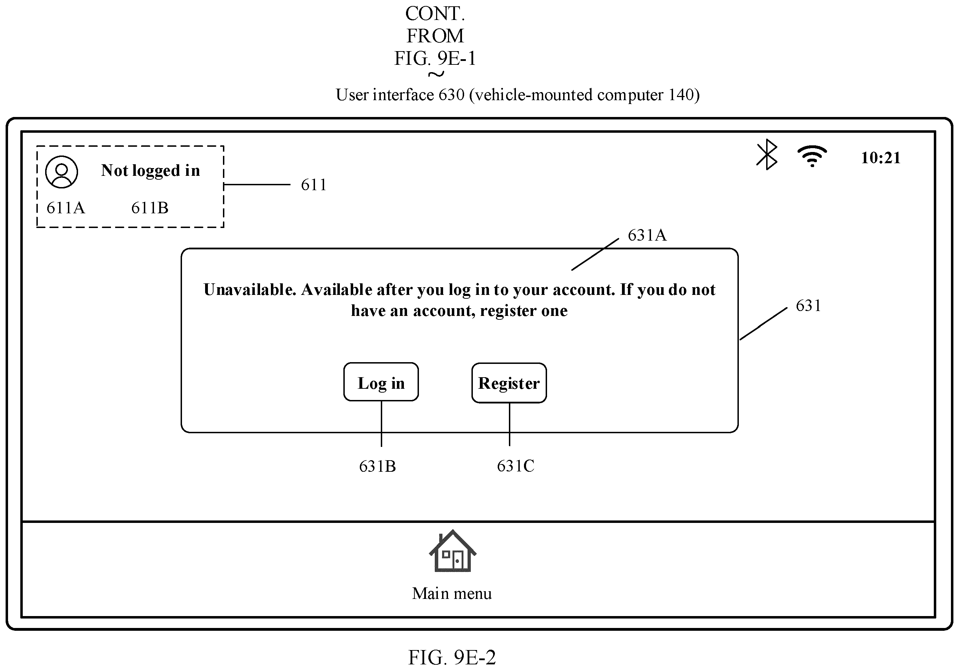

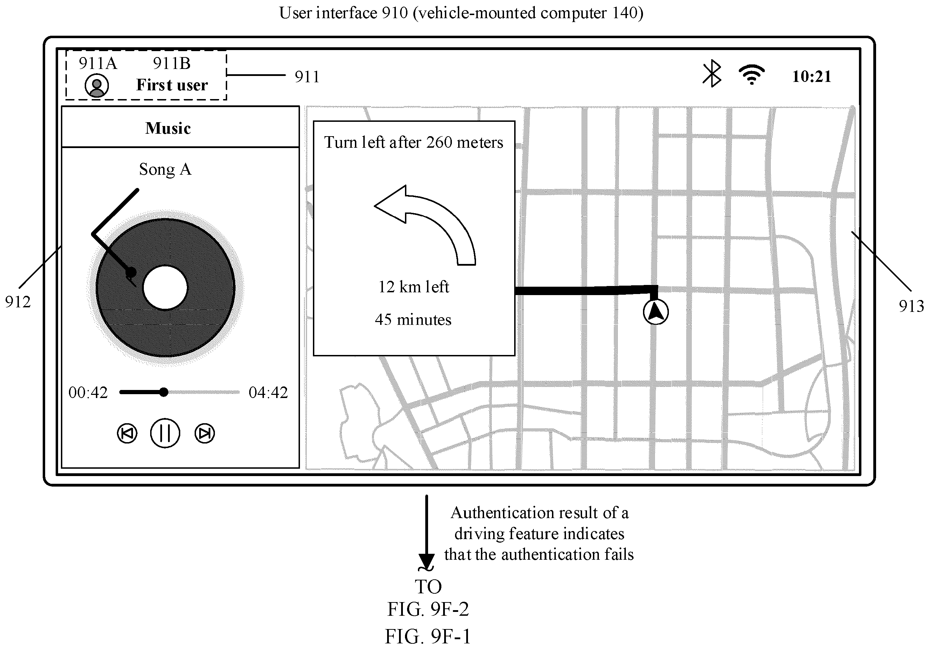

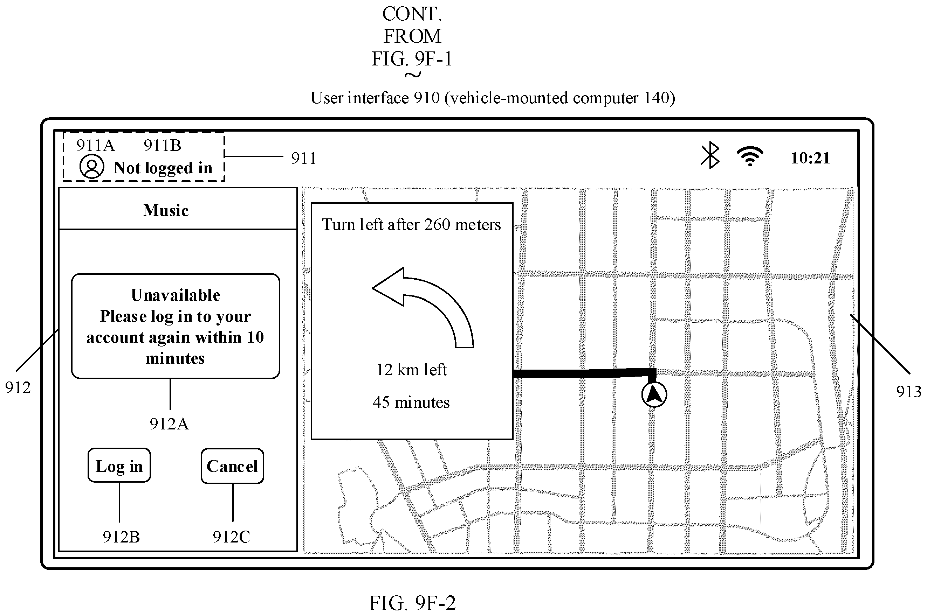

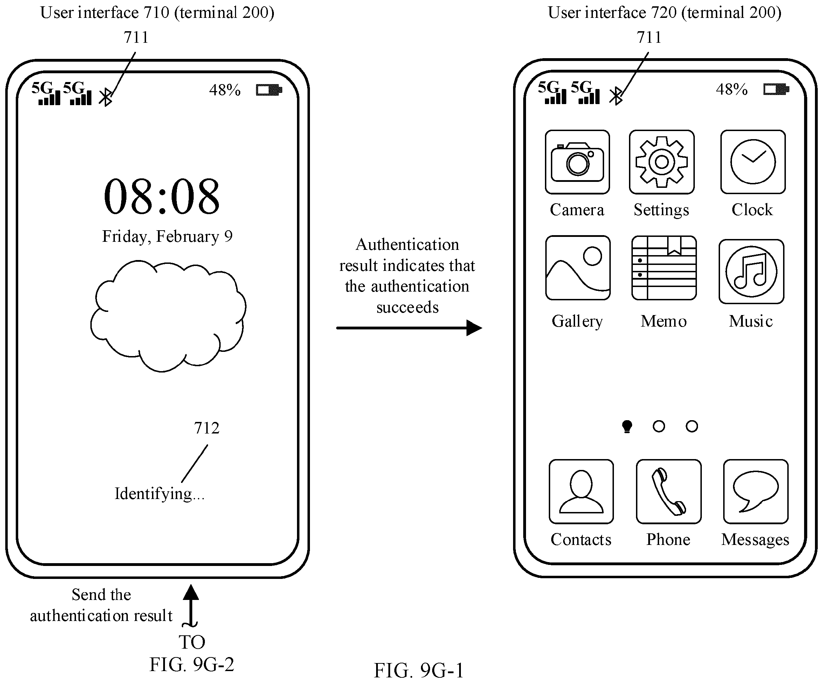

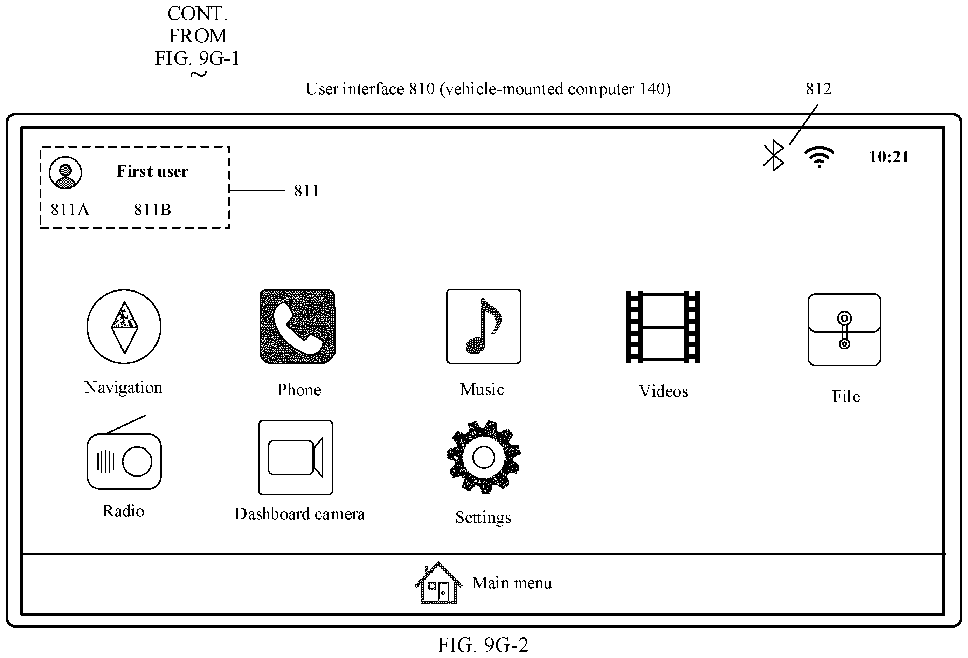

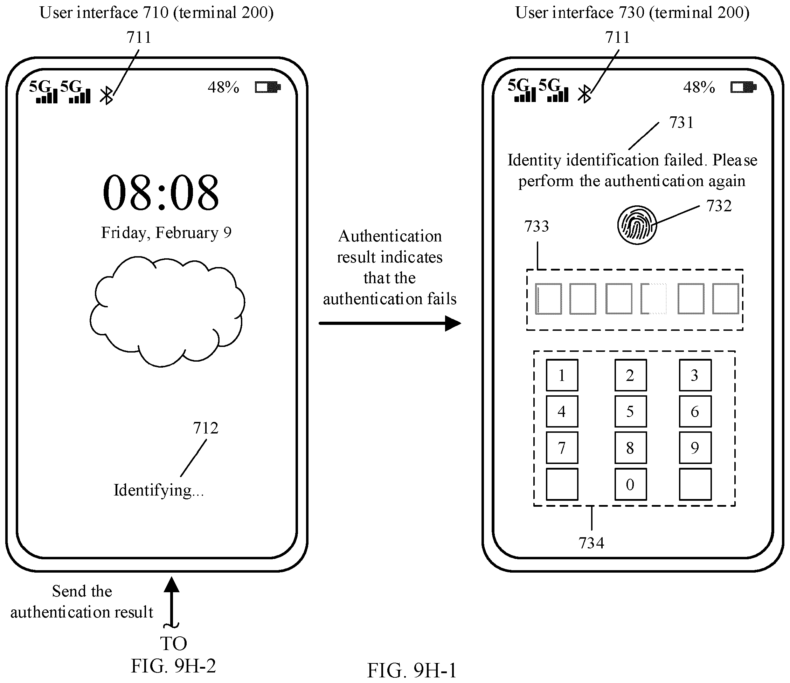

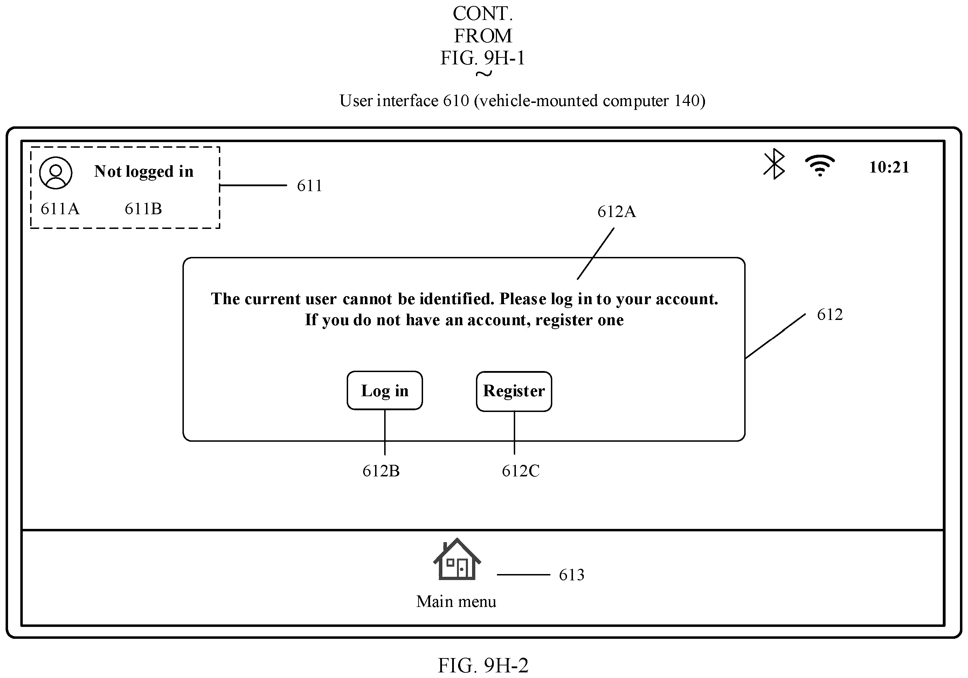

In some embodiments, the vehicle may first output second prompt information, and the second prompt information may be used to prompt the user to register the driving feature, for example, whether to register the driving feature. A form of the second prompt information is similar to the form of the first prompt information. Details are not described again. After outputting the second prompt information, the vehicle may register the driving feature for the first user in response to a user operation of the first user. A specific example is shown in FIG. 9B below.

In addition to the foregoing example, in some other embodiments, after the user stops driving the vehicle, the historical driving data of the first user and the collected driving behavior data are still insufficient to extract the driving feature. For example, if a sum of a data amount of the historical driving data of the first user and a data amount of the collected driving behavior data is less than a third data amount, the vehicle may update the historical driving data of the first user, for example, add the collected historical driving data and/or the intermediate data obtained through the feature extraction to the historical driving data of the first user.

In addition to the foregoing example, in some other embodiments, the vehicle may obtain only the historical driving data of the first user, but does not collect the driving behavior data, and perform the feature extraction based on the historical driving data of the first user to obtain the driving feature. This avoids repeated collection of the driving behavior data, and a registration process is fast. In some embodiments, after obtaining the historical driving data of the first user, the vehicle may first determine whether the historical driving data of the first user can be used to obtain the driving feature. Optionally, when the historical driving data of the first user can be used to obtain the driving feature, the vehicle may not collect the driving behavior data, but directly perform the feature extraction based on the historical driving data of the first user to obtain the driving feature. Optionally, when the historical driving data of the first user cannot be used to obtain the driving feature, the vehicle may collect the driving behavior data, and perform the feature extraction based on the historical driving data of the first user and the collected driving behavior data to obtain the driving feature. In addition, the vehicle may alternatively collect the driving behavior data when the vehicle is different from the vehicle corresponding to the historical driving data of the first user, and perform the feature extraction based on the historical driving data of the first user and the collected driving behavior data to obtain the driving feature. A condition for whether to collect the driving behavior data after the historical driving data is obtained is not limited in this application.

In some other embodiments, the vehicle may alternatively obtain only the driving behavior data, but does not obtain the historical driving data of the first user, and perform the feature extraction based on the collected driving behavior data to obtain the driving feature. That the historical driving data of the first user is not obtained may be that the vehicle does not perform an operation of obtaining the historical driving data of the first user, or may be that the vehicle fails to obtain the historical driving data of the first user. For example, the vehicle or another device (for example, a server) connected to the vehicle does not store the historical driving data of the first user.

In some other embodiments, the vehicle may alternatively directly obtain the driving feature or the driving feature template (for example, a driving feature template registered in another vehicle) from another device (for example, another vehicle or a server), and directly perform registration based on the obtained driving feature or the obtained driving feature template. This avoids repeated collection of the driving behavior data and repeated feature extraction. It is fast and convenient for a user who registers the driving feature to register the driving feature with the current vehicle, and the registration process is fast.

In addition to the foregoing example, in some other embodiments, after the vehicle obtains the driving feature, when the first user registers the driving feature template, the vehicle may update the driving feature template of the first user based on the obtained driving feature. A specific example is shown in FIG. 4 below.

In this application, the vehicle may register the driving feature template for the user in different scenarios, for example, a scenario in which the authentication in the first manner is performed or is not performed, and a scenario in which the historical driving data is obtained or is not obtained, so that requirements of various scenarios can be met, and application scenarios are wide.

In some embodiments, the vehicle may update the registered driving feature template based on the obtained driving feature. A specific example is shown in FIG. 4 below.

FIG. 4 is an example of a schematic flowchart of updating a driving feature template. A vehicle in FIG. 4 may be the vehicle 100 shown in FIG. 1A and FIG. 1B. A process of updating the driving feature template may include but is not limited to the following steps.

S301: The vehicle performs authentication in a first manner, to obtain an authentication result indicating that the authentication succeeds.

Specifically, for a description in which the vehicle performs the authentication in the first manner, refer to S201 in FIG. 3 above. Details are not described again.

S302: The vehicle obtains a driving feature template of a first user.

In some embodiments, the vehicle may read the driving feature template of the first user from locally stored content. In some other embodiments, the vehicle may obtain the driving feature template of the first user from another device (for example, a server). Optionally, a vehicle corresponding to the obtained driving feature template of the first user may be different from the current vehicle.

S303: The vehicle obtains first driving data of the first user.

In some embodiments, the first driving data may include collected driving behavior data, that is, the vehicle may collect the driving behavior data. The process is similar to S101 in FIG. 2. For details, refer to the description of S101 in FIG. 2.

In some embodiments, the first driving data may include historical driving data, that is, the vehicle may obtain the historical driving data of the first user. The process is similar to S202 in FIG. 3. For details, refer to the description of S202 in FIG. 3.

In some embodiments, after obtaining the historical driving data of the first user, the vehicle may not collect the driving behavior data, so that repeated collection of the driving behavior data is avoided, and processing is fast.

In some embodiments, after obtaining the historical driving data of the first user, the vehicle may collect the driving behavior data when a preset collection condition is met. The preset collection condition is, for example, but is not limited to, that the historical driving data of the first user cannot be used to obtain a driving feature, or the current vehicle is different from a vehicle corresponding to the historical driving data of the first user.

In some embodiments, if the vehicle corresponding to the driving feature template of the first user is different from the current vehicle, and the vehicle corresponding to the obtained historical driving data of the first user is different from the current vehicle, the vehicle may collect the driving behavior data, and update the driving feature template of the first user based on the collected driving behavior data, thereby improving accuracy of driving feature authentication.

In some embodiments, the collected driving behavior data may be collected when the user manually operates the vehicle to perform driving, that is, the vehicle may not collect the driving behavior data during self-driving.

S304: The vehicle performs feature extraction based on the first driving data to obtain a driving feature.

S304 is similar to S102 in FIG. 2. A difference lies in that in S304, the vehicle performs the feature extraction based on the first driving data. For other descriptions, refer to the description of S102 in FIG. 2.

S305: The vehicle updates the driving feature template of the first user based on the driving feature obtained through the feature extraction.

For example, the vehicle adds the obtained driving feature to the driving feature template of the first user.

For another example, the vehicle replaces, with the obtained driving feature, a driving feature that is of a same type as the obtained driving feature and that is in the driving feature template of the first user.

In some embodiments, the vehicle may update, based on the obtained driving feature, the feature template of the first user after the user stops driving.

In some embodiments, each time after obtaining the driving feature, the vehicle may update the driving feature template of the first user based on the obtained driving feature.

In some embodiments, after obtaining the driving feature, when a preset update condition is met, the vehicle may update the driving feature template of the first user based on the obtained driving feature. For example, the preset update condition is that a difference between a moment at which the driving feature is obtained and a latest moment at which the driving feature template is updated is greater than or equal to a preset time difference, a data amount of the obtained driving feature is greater than or equal to a third data amount, a quantity of times of obtaining the driving feature is greater than or equal to a preset quantity of times, a similarity degree between the obtained driving feature and the driving feature template is less than or equal to a first similarity threshold, or the like.

In addition to the foregoing example, in some other embodiments, the first driving data of the first user obtained by the vehicle may include a driving feature. Optionally, the driving feature is obtained by another vehicle by collecting the driving behavior data and performing the feature extraction. Optionally, when the first driving data is the driving feature, the vehicle may not perform the feature extraction, and directly update the driving feature template of the first user based on the driving feature. For example, S304 is not performed, so that repeated feature extraction is avoided, and processing is fast.

In addition to the foregoing example, in some other embodiments, when failing to identify the current user, the vehicle may first perform the feature extraction to obtain the driving feature, and then identify the current user after obtaining the driving feature, and update the driving feature template for the current user based on the obtained driving feature.

In this application, the vehicle may update the driving feature template of the first user based on the driving feature obtained through the feature extraction, to enhance validity and reliability of the driving feature template, thereby improving accuracy of performing authentication on a user identity based on the driving feature template.

In some embodiments, the vehicle may process the obtained driving behavior data with reference to an obtained driving scenario and a reference driving policy, to implement the feature extraction. A specific example is shown in FIG. 5 below.

FIG. 5 is an example of a schematic flowchart of a feature extraction process. The process may be implemented by a vehicle, for example, the vehicle 100 shown in FIG. 1A and FIG. 1B. The process may include but is not limited to the following steps.

S401: The vehicle obtains driving behavior data.

In some embodiments, the driving behavior data obtained by the vehicle may include driving behavior data collected by the vehicle. In some embodiments, the driving behavior data obtained by the vehicle may include driving behavior data in historical driving data obtained by the vehicle.

S402: The vehicle obtains a driving scenario.

In some embodiments, the driving scenario obtained by the vehicle may include a driving scenario identified by the vehicle based on an obtained environment parameter. The environment parameter includes, for example, but is not limited to, a current position of the vehicle, a status of a surrounding object, and a road condition such as traffic signal lights. In some embodiments, the driving scenario obtained by the vehicle may include a driving scenario obtained by the vehicle from another device (for example, a server).

For example, the driving scenario obtained by the vehicle includes at least one of the following scenarios: a straight road and the road is not congested, a straight road and the road is congested (for example, a vehicle following situation exists), and a 180-degree left-turn lane, a 180-degree right-turn lane, an S-shaped curve, uphill startup, an intersection with traffic signal lights, a 90-degree curve at an intersection, a highway, and the like.

S403: The vehicle classifies driving behavior data based on the driving scenario.

In some embodiments, that the vehicle classifies the driving behavior data based on the driving scenario may include: The vehicle sets a scenario label for the driving behavior data, and different types of driving scenarios correspond to different scenario labels.

In some embodiments, types of driving behavior data may be different in different driving scenarios. For example, in the scenario in which the road is straight and the road is not congested, the type of the driving behavior data may include a driving speed, a position on the road, and the like. In the scenario in which the road is straight and the road is congested, the type of the driving behavior data may include a distance from an adjacent vehicle, a manner in which a brake, an accelerator, or a clutch is stepped on, and the like.

S404: The vehicle obtains a reference driving policy.

Specifically, the reference driving policy is used to implement a driving process of the vehicle. The reference driving policy may include but is not limited to a driving route and/or a driving manner. In some embodiments, the reference driving policy may be used by the vehicle to perform navigation and/or self-driving (that is, the vehicle can perform driving without a user operation).

In some embodiments, the reference driving policy obtained by the vehicle may include a driving policy determined by the vehicle based on the obtained environment parameter. In some embodiments, the reference driving policy obtained by the vehicle may include a driving policy obtained by the vehicle from another device (for example, a server).

In some embodiments, the reference driving policy obtained by the vehicle may include a plurality of reference driving policies applied to different driving scenarios.

A sequence of S401 to S403 and S404 is not limited.

S405: The vehicle performs feature extraction based on the classified driving behavior data and according to the reference driving policy.

In some embodiments, the vehicle may compare the reference driving policy with the classified historical driving data, and use a difference between the two as a driving feature. Optionally, the vehicle may compare historical driving data in a first driving scenario with a reference driving policy in the first driving scenario, and use a difference between the two as the driving feature. The first driving scenario is any one of the driving scenarios obtained by the vehicle.

In some embodiments, the vehicle may use the classified driving behavior data and the reference driving policy as an input, and perform processing by using a driving feature extraction algorithm, to obtain the output driving feature. Optionally, the vehicle may further use the obtained environment parameter together as the input to perform the feature extraction.

In some embodiments, if the vehicle successfully performs the feature extraction, the driving feature can be obtained. Optionally, the obtained driving feature may be used for at least one of the following: registering the driving feature, updating a driving feature template, and performing identity authentication.

In some other embodiments, the vehicle fails to perform the feature extraction. For example, a data amount of the obtained driving behavior data is less than a fourth data amount. Optionally, the vehicle may store the obtained driving behavior data as the historical driving data, or update stored historical driving data. In addition, the vehicle may alternatively store, as the historical driving data, other intermediate data obtained during the feature extraction, or update the stored historical driving data, for example, the classified driving data and the difference between the reference driving policy and the classified historical driving data.

In addition to the foregoing example, in some other embodiments, the vehicle may obtain only the driving scenario, but does not obtain the reference driving policy, classify the driving data based on the driving scenario, and then perform the feature extraction based on the classified driving data.

In some other embodiments, the vehicle may obtain only the reference driving policy, and perform the feature extraction based on the obtained driving data and according to the reference driving policy.

In this application, the feature extraction may be performed with reference to the driving scenario to obtain the driving feature. Considering that driving behavior in different driving scenarios may be different, in this application, the difference between the reference driving policy and the driving behavior data may be compared to add a one-dimensional analyzable user feature, thereby improving precision of the feature extraction. The obtained driving feature has high individual differentiation and is reliable. Therefore, accuracy of the identity authentication performed based on the driving feature is improved.

In addition to the foregoing example, in some other embodiments, after obtaining the driving feature, the vehicle may implement the self-driving based on the obtained driving feature, for example, update, based on the obtained driving feature, related data used to implement the self-driving, like the reference driving policy. In other words, the related data used to implement the self-driving may be corrected based on the driving feature of the user when the user actually drives the vehicle. This conforms to a user habit, delivers good user experience, and further improves safety and reliability of the self-driving.

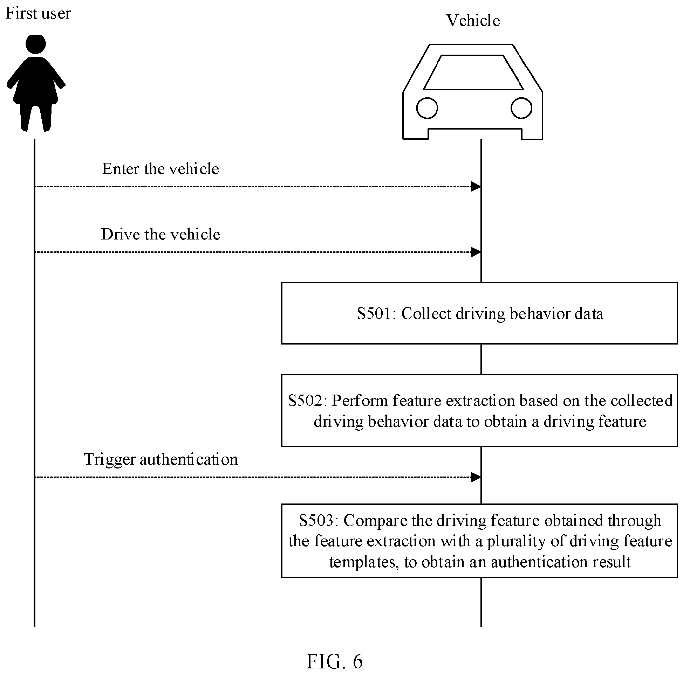

In a possible implementation, the vehicle may perform the identity authentication on the user based on the driving feature. A specific example is shown in FIG. 6 to FIG. 8 below.

FIG. 6 is an example of a schematic flowchart of an identity authentication method. A vehicle in FIG. 6 may be the vehicle 100 shown in FIG. 1A and FIG. 1B. The method may include but is not limited to the following steps.

S501: The vehicle collects driving behavior data.

S501 is an optional step.

S502: The vehicle performs feature extraction based on the collected driving behavior data to obtain a driving feature.

S502 is an optional step.

S501 and S502 are similar to S101 and S102 in FIG. 2. For details, refer to the descriptions of S101 and S102 in FIG. 2.

In some embodiments, a feature extraction process may be shown in FIG. 5. For details, refer to the description in FIG. 5.

S503: The vehicle compares the driving feature obtained through the feature extraction with a plurality of driving feature templates, to obtain an authentication result.

Specifically, when the vehicle cannot identify a current user, the vehicle may separately compare the driving feature obtained through the feature extraction with the plurality of registered driving feature templates, to obtain the authentication result. The plurality of driving feature templates may be some or all of the registered driving feature templates. Optionally, that the vehicle cannot identify the current user may include that the vehicle does not perform identity authentication on the current user. Optionally, that the vehicle cannot identify the current user may include that a result of performing the identity authentication on the current user by the vehicle in a second manner indicates that the authentication fails. The second manner includes, for example, but is not limited to, at least one of the following: vehicle key authentication, password authentication, biological feature authentication, PIN code authentication, connected device authentication, and authentication based on the driving feature (referred to as driver feature authentication for short, and for a specific authentication process, refer to the procedures shown in FIG. 6).

In some embodiments, when the vehicle determines to trigger the identity authentication, any one of S501 to S503 is performed. In some embodiments, the vehicle may periodically trigger the identity authentication. In some other embodiments, the vehicle may determine to trigger the identity authentication when identifying that a scenario is a third preset scenario. A description of the third preset scenario is similar to that of the first preset scenario in S101 in FIG. 2. In some other embodiments, when receiving a user operation, the vehicle may determine to trigger the identity authentication. The user operation is, for example, an operation of closing a vehicle door, an operation of fastening a seat belt, an operation of starting the vehicle, such as stepping on an accelerator, starting a vehicle-mounted computer, accessing personal information such as an address and a contact on the vehicle-mounted computer, opening some applications on the vehicle-mounted computer, and performing operations such as performing small-amount payment. In some other embodiments, the vehicle may determine to trigger the identity authentication when the user enters the vehicle. In some other embodiments, the vehicle may determine to trigger the identity authentication when the user starts driving the vehicle. For examples in which the vehicle determines that the user enters the vehicle and the vehicle determines whether the user drives the vehicle, refer to the example of S101 in FIG. 2. In some other embodiments, when receiving a request message (for example, a request message used to obtain the authentication result) sent by another connected device (for example, a terminal device), the vehicle may determine to trigger the identity authentication.

In some embodiments, the vehicle may separately compare the driving feature with the plurality of driving feature templates, and obtain a plurality of matching results respectively corresponding to the plurality of driving feature templates. Optionally, any matching result may indicate a similarity degree between the driving feature and a corresponding driving feature template. When the similarity degree indicated by the matching result is greater than or equal to a second similarity threshold, the matching result may indicate that the authentication succeeds; otherwise, the matching result indicates that the authentication fails.

In some embodiments, the vehicle may obtain the authentication result based on at least one matching result within a first preset period of time. For example, when a quantity of matching results indicating that the authentication succeeds in the at least one matching result within the first preset period of time is greater than or equal to a first quantity threshold, the authentication result indicates that the authentication succeeds; otherwise, the authentication result indicates that the authentication fails. In some embodiments, the matching result within the first preset period of time may be a matching result obtained within the first preset period of time. In some other embodiments, the matching result within the first preset period of time may be a matching result obtained based on a driving feature obtained within the first preset period of time. In some other embodiments, the matching result within the first preset period of time may be a matching result obtained based on driving behavior data collected within the first preset period of time.

In some other embodiments, the vehicle may obtain the authentication result based on a preset quantity of matching results. For example, when a quantity of matching results indicating that the authentication succeeds in the preset quantity of matching results is greater than or equal to a second quantity threshold, the authentication result indicates that the authentication succeeds; otherwise, the authentication result indicates that the authentication fails.

In some embodiments, the driving feature obtained based on the collected driving behavior data may include driving features respectively corresponding to a plurality of driving modes, and the driving feature template may include driving feature templates of the plurality of driving modes. In some embodiments, when comparing the driving feature with the driving feature template, the vehicle compares only a driving feature of a first driving mode with a driving feature template of the first driving mode, and does not compare the driving feature of the first driving mode with a driving feature template of another driving mode. In some other embodiments, when comparing the driving feature with the driving feature template, the vehicle may compare the driving feature of the first driving mode with the driving feature templates of the plurality of driving modes. The first driving mode is any one of the plurality of driving modes.

In some embodiments, when a matching result obtained when the driving feature of the first driving mode is compared with a driving feature template of a second driving mode indicates that the authentication succeeds, prompt information may be output, where the prompt information is used to prompt the user to switch the driving mode to the second driving mode, and the second driving mode is different from the first driving mode.

In some embodiments, the driving feature obtained based on the collected driving behavior data may include driving features respectively corresponding to a plurality of driving scenarios, and the driving feature template may include driving feature templates of the plurality of driving scenarios. In some embodiments, when comparing the driving feature with the driving feature template, the vehicle compares only a driving feature of a first driving scenario with a driving feature template of the first driving scenario, and does not compare the driving feature of the first driving scenario with a driving feature template of another driving scenario. In some other embodiments, when comparing the driving feature with the driving feature template, the vehicle may compare the driving feature of the first driving scenario with the driving feature templates of the plurality of driving scenarios. The first driving scenario is any one of the plurality of driving scenarios.

In some other embodiments, when the obtained authentication result indicates that the authentication succeeds, the vehicle may determine that the current user is an authorized user (which may also be understood as that the vehicle identifies a first user), and the first user can normally use the vehicle. Optionally, that the first user can normally use the vehicle is specifically that the first user can use all functions of the vehicle, including, for example, but is not limited to, adjusting components such as a seat, a rearview mirror, and the seat belt, operating driving components such as a steering wheel, a gear shifter, the accelerator, and a brake, and using functions such as navigation, music, and personal information viewing on the vehicle-mounted computer.

In some embodiments, the vehicle may be connected to another device (for example, a terminal device, and the terminal device is used as an example for description). After obtaining the authentication result indicating that the authentication succeeds, the vehicle may send the authentication result to the terminal device. The terminal device may determine, based on the authentication result, that the current user is the authorized user (which may also be understood as that the first user is identified), and the first user can normally use the terminal device, including, for example, but is not limited to that the terminal device performs screen unlocking and provides permission to access an application, so that the first user can use a function of the application, view the personal information, and the like.

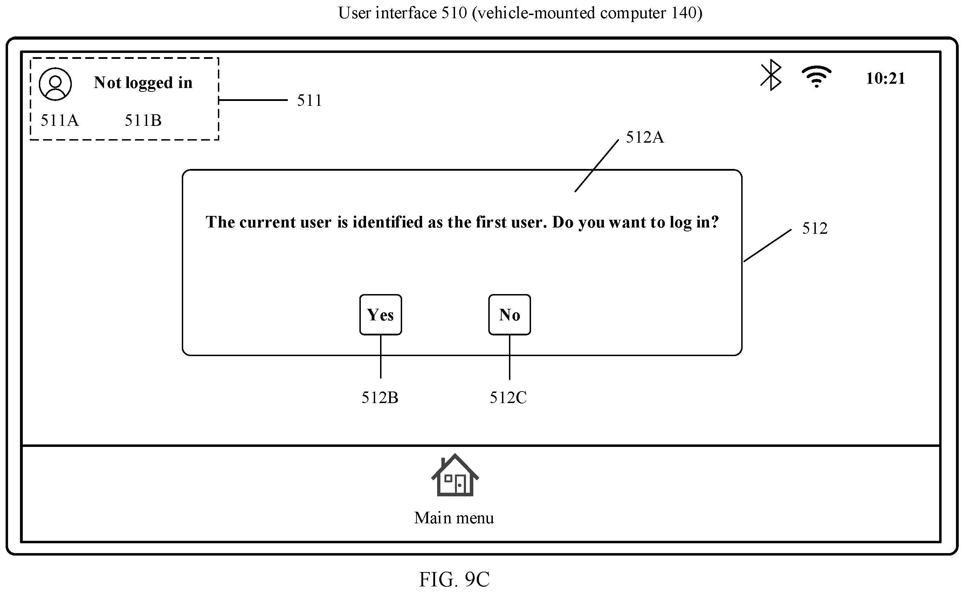

In some embodiments, when the obtained authentication result indicates that the authentication succeeds, the vehicle may output third prompt information. Optionally, the third prompt information is used to prompt that the currently identified user is the first user. Optionally, the third prompt information is used to prompt the user whether to log in to an account of the first user, for example, prompt information 512 shown in FIG. 9C.

In some embodiments, when the obtained authentication result indicates that the authentication succeeds, the vehicle may provide a corresponding service for the first user based on stored configuration information of the first user, for example, seat height and rearview mirror setting manners or favorite music playing.

In some other embodiments, when the obtained authentication result indicates that the authentication fails, the vehicle may determine that the current user is not the authorized user (which may also be understood as that the vehicle cannot identify the current user), and the current user cannot use the vehicle normally. Optionally, that the current user cannot use the vehicle normally is specifically that the current user can use only some functions of the vehicle. Optionally, the some functions may be understood as functions that do not affect driving safety of the vehicle, including, for example, but are not limited to: when the vehicle is not driving, the current user can only open or close the vehicle door, and another function cannot be used; and when the vehicle is driving, the current user can only operate the driving component to drive, but cannot operate the components such as the seat and the rearview mirror and use a related function of the vehicle-mounted computer. Optionally, that the current user cannot use the vehicle normally is specifically that the current user cannot use any function of the vehicle. If the vehicle is driving at this time, the vehicle may enable a self-driving function. Optionally, when the obtained authentication result indicates that the authentication fails, the vehicle may limit a previously enabled function. For example, before the authentication result is obtained, the user may use a music playing function of the vehicle-mounted computer, and after the authentication result is obtained, the music played by the vehicle-mounted computer stops. Optionally, when the obtained authentication result indicates that the authentication fails, the vehicle may further limit a driving speed of the vehicle or the like.

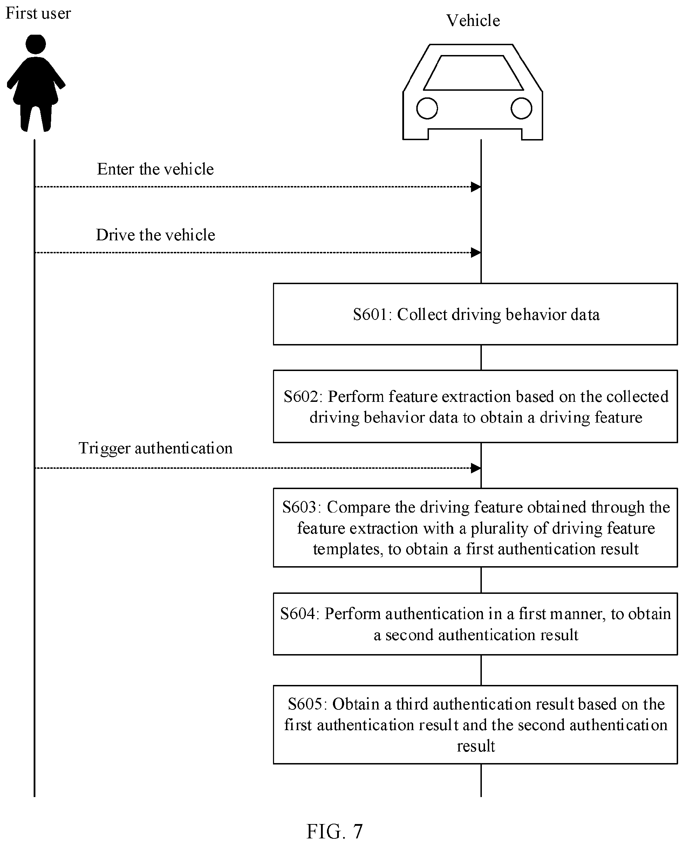

In some embodiments, when the obtained authentication result indicates that the authentication fails, the vehicle may output fourth prompt information. Optionally, the fourth prompt information is used to prompt the user to perform the identity authentication again. Optionally, the fourth prompt information is used to prompt the user to complete the identity authentication within a second preset period of time. Optionally, the fourth prompt information is used to prompt that the user cannot use the vehicle normally after the second preset period of time. For an example in which the user cannot use the vehicle normally, refer to the foregoing description in which the current user cannot use the vehicle normally. For example, the fourth prompt information is prompt information 912A shown in a lower figure in FIG. 9F-1 and FIG. 9F-2 below. Optionally, the vehicle may limit some functions of the vehicle within the second preset period of time after outputting the fourth prompt information. For example, the user cannot operate the component like the seat or the rearview mirror and use the music playing function in the vehicle-mounted computer. Optionally, when the vehicle determines that an authentication result obtained through the identity authentication performed again within the second preset period of time indicates that the authentication succeeds, the vehicle may cancel the limitation on the limited some functions of the vehicle, for example, output prompt information, to prompt the user that related functions are unlocked. Optionally, when the user does not complete the identity authentication within the second preset period of time, or when the vehicle determines that the authentication result obtained through the identity authentication performed again within the second preset period of time indicates that the authentication fails, the vehicle may limit more functions after the second preset period of time. For example, the current user cannot use any function (for example, a navigation function in the vehicle-mounted computer) of the vehicle, and if the vehicle is driving at this time, the vehicle may enable the self-driving function. Optionally, the identity authentication is an authentication manner that has small interference to the user, for example, voiceprint authentication or facial authentication. Optionally, the identity authentication includes the driving feature authentication, the biological feature authentication, and authentication in another manner. For example, in an identity authentication method shown in FIG. 7, the identity authentication is performed based on the driving feature with high stability, the biological feature with a high individual identification degree, and another feature. Therefore, accuracy of the authentication is high.

In some embodiments, when the obtained authentication result indicates that the authentication fails, the vehicle may trigger the identity authentication performed in a third manner, that is, the identity authentication may be performed on the current user in the third manner. For an example in which the vehicle performs a corresponding operation based on a result of the identity authentication, refer to the description in which the vehicle performs the corresponding operation based on the authentication result obtained in S503. The third manner includes, for example, but is not limited to, at least one of the following: vehicle key authentication, password authentication, biological feature authentication, PIN code authentication, connected device authentication, and driving feature authentication. Optionally, the third manner is an authentication manner that has small interference to the user, for example, voiceprint authentication or facial authentication. Optionally, the third manner includes the driving feature authentication and authentication in another manner. For example, in an identity authentication method shown in FIG. 7, the identity authentication is performed based on the driving feature with high stability, the biological feature with a high individual identification degree, and another feature. Therefore, accuracy of the authentication is high.

In some embodiments, after performing the authentication based on the driving feature and obtaining the authentication result, the vehicle may perform the identity authentication in a first manner. The vehicle may perform the authentication on the current user based on the authentication result of the driving feature and an authentication result in the first manner. A specific manner is similar to S605 in FIG. 7. For details, refer to a description of S605 in FIG. 7 below. In this application, the vehicle may perform the identity authentication based on the driving feature, and the identity authentication is imperceptible to the user and does not interfere with the user driving the vehicle. In addition, the driving feature can well adapt to a driving process, and stability is high. In addition, the driving feature may alternatively be obtained with reference to the driving scenario and/or a reference driving policy. Reliability of the driving feature is further improved, thereby improving the accuracy of the identity authentication.

In some embodiments, the vehicle may perform the identity authentication on the user based on the driving feature, the biological feature, and another feature. A specific example is shown in FIG. 7 below.

FIG. 7 is an example of a schematic flowchart of another identity authentication method. A vehicle in FIG. 7 may be the vehicle 100 shown in FIG. 1A and FIG. 1B. The method may include but is not limited to the following steps.

S601: The vehicle collects driving behavior data.

S602: The vehicle performs feature extraction based on the collected driving behavior data to obtain a driving feature.

S603: The vehicle compares the driving feature obtained through the feature extraction with a plurality of driving feature templates, to obtain a first authentication result.

S601 to S603 are similar to S501 to S503 in FIG. 6. A difference lies in that in S503, the vehicle determines, based on whether the obtained authentication result indicates that the authentication succeeds, whether the first user is the authorized user, and then performs the corresponding operation. However, in S603, after obtaining the first authentication result, the vehicle obtains a third authentication result based on the first authentication result and a second authentication result, and determines, based on whether the third authentication result indicates that the authentication succeeds, whether the first user is the authorized user. For other descriptions, refer to the descriptions of S501 to S503 in FIG. 6.

S604: The vehicle performs authentication in a first manner, to obtain the second authentication result.

Specifically, the first manner is an authentication manner other than driving feature authentication, for example, but is not limited to, vehicle key authentication, password authentication, biological feature authentication, PIN code authentication, and connected device authentication. Optionally, the first manner is an authentication manner that has small interference to the user, for example, voiceprint authentication or facial authentication.

A sequence of any one of steps S601 to S603 and S604 is not limited. For example, the user may first cooperate with the vehicle in a quiet and stable environment to perform the authentication in the first manner, and in a subsequent process of driving the vehicle by the user, the vehicle performs the authentication based on the driving feature in a manner in which the authentication is imperceptible to the user. In other words, the vehicle may perform S604 before the user drives the vehicle, and then perform S601 to S603 after the user drives the vehicle.

In some embodiments, when the vehicle determines to trigger identity authentication, any one of S601 to S604 may be performed. For a case in which the vehicle determines to trigger the identity authentication, refer to the description in FIG. 6 in which the vehicle determines to trigger the identity authentication.

S605: The vehicle obtains the third authentication result based on the first authentication result and the second authentication result.

In some embodiments, an expression of a third authentication result C obtained by the vehicle based on a first authentication result A and a second authentication result B is as follows:
$C = s \times A + t \times B$ where *s + t = 1,* s > 0, and *t >* 0. s may be understood as a weight occupied by the first authentication result A when the third authentication result C is determined, and t may be understood as a weight occupied by the second authentication result when the third authentication result C is determined. In some embodiments, s and t may be preset by the vehicle.

In some embodiments, when both the first authentication result and the second authentication result indicate that the authentication succeeds, the third authentication result indicates that the authentication succeeds.

In some embodiments, when the first authentication result indicates that the authentication fails, and the second authentication result indicates that the authentication succeeds, the vehicle may update the driving feature template of the first user based on the driving feature (namely, the driving feature used to obtain the first authentication result) obtained through the feature extraction. The first user is identified by the vehicle based on the second authentication result. In some embodiments, when the first authentication result indicates that the authentication fails, the vehicle may limit some functions of the vehicle. After obtaining the second authentication result indicating that the authentication succeeds, the vehicle may cancel the limitation on the functions of the vehicle. For example, the vehicle may output prompt information, to prompt the user that related functions are unlocked.

In some embodiments, when the first authentication result indicates that the authentication succeeds, and the second authentication result indicates that the authentication fails, the vehicle may perform at least one of the following: triggering the identity authentication again, limiting the function of the vehicle, deleting the driving feature template of the first user, and triggering updating of the driving feature template of the first user. The first user is identified by the vehicle based on the first authentication result. For examples in which the identity authentication is triggered again and the function of the vehicle is limited, refer to the description in S503 in FIG. 6 above in which the obtained authentication result indicates that the authentication fails.

In some embodiments, the vehicle may determine, based on whether the third authentication result indicates that the authentication succeeds, whether the first user is the authorized user, and then perform different operations. For details, refer to the description in S503 in FIG. 6 in which the vehicle determines, based on whether the obtained authentication result indicates that the authentication succeeds, whether the first user is the authorized user, and then performs the different operations.

In this application, the vehicle may perform the identity authentication based on the driving feature with high stability, the biological feature with a high individual identification degree, and another feature. This not only ensures stability of the identity authentication, but also further improves accuracy of the identity authentication, and the authentication result is reliable.

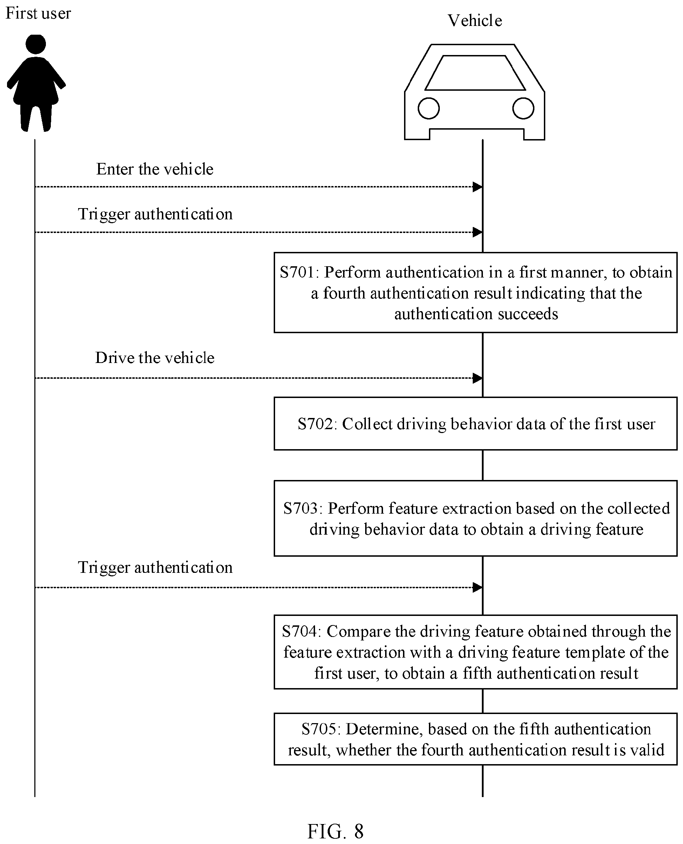

In some embodiments, after obtaining the authentication result indicating that the authentication succeeds, the vehicle may implement subsequent continuous authentication based on the driving feature. A specific example is shown in FIG. 8 below.

FIG. 8 is an example of a schematic flowchart of another identity authentication method. A vehicle in FIG. 8 may be the vehicle 100 shown in FIG. 1A and FIG. 1B. The method may include but is not limited to the following steps.

S701: The vehicle performs authentication in a first manner, to obtain a fourth authentication result indicating that the authentication succeeds.

S701 is similar to S201 in FIG. 3. For details, refer to the description of S201 in FIG. 3.

In some embodiments, for an example of an operation performed when the vehicle obtains the fourth authentication result indicating that the authentication succeeds, refer to the description in S503 in FIG. 6 in which the operation is performed when the authentication result obtained by the vehicle indicates that the authentication succeeds.

S702: The vehicle collects driving behavior data of a first user.

S703: The vehicle performs feature extraction based on the collected driving behavior data to obtain a driving feature.

S702 and S703 are similar to S101 and S102 in FIG. 2. For details, refer to the descriptions of S101 and S102 in FIG. 2.

S704: The vehicle compares the driving feature obtained through the feature extraction with a driving feature template of the first user, to obtain a fifth authentication result.

Specifically, when identifying the first user, the vehicle may compare the driving feature obtained through the feature extraction with the registered driving feature template of the first user, to obtain the fifth authentication result. Optionally, that the vehicle identifies the first user may be that the vehicle performs the authentication in the first manner and obtains the authentication result indicating that the authentication succeeds. Optionally, that the vehicle identifies the first user may be that the vehicle determines that the authentication result indicating that the authentication on the first user succeeds is valid. For example, after the vehicle performs the authentication in the first manner and obtains the authentication result indicating that the authentication succeeds, an authentication result of subsequent continuous authentication also indicates that the authentication succeeds.

In some embodiments, when the vehicle determines to trigger identity authentication, any one of S702 and S703 is performed. For a case in which the vehicle determines to trigger the identity authentication, refer to the description in FIG. 6 in which the vehicle determines to trigger the identity authentication.

In some embodiments, the vehicle may compare the driving feature with the driving feature template of the first user, and obtain a corresponding matching result. For details about a description of the matching result and a description in which the vehicle obtains the fifth authentication result based on the matching result, refer to the description of the matching result and the description in which the vehicle obtains the authentication result based on the matching result in S503 in FIG. 6 above.

S705: The vehicle determines, based on the fifth authentication result, whether the fourth authentication result is valid.

In some embodiments, when the fifth authentication result indicates that the authentication succeeds, the vehicle may determine that the fourth authentication result is valid. In other words, the current user is still an authorized user (which may also be understood as that the current user is still the first user). The vehicle may continue to provide the first user with permission to use the vehicle, and the first user can normally use the vehicle. Optionally, the permission to use the vehicle is provided by the vehicle for the first user when the vehicle obtains the fourth authentication result indicating that the authentication succeeds.

In some other embodiments, when the fifth authentication result indicates that the authentication fails, the vehicle may determine that the fourth authentication result is invalid (which may also be referred to as expiration of validity). In other words, the current user is not the authorized user (for example, the current user is not the previously identified first user), and the current user cannot use the vehicle normally. Optionally, when determining that the fourth authentication result is invalid, the vehicle may delete the stored fourth authentication result.

In some embodiments, when the fifth authentication result indicates that the authentication fails, the vehicle may no longer provide the permission to use the vehicle, for example, disable a function of the vehicle, and the first user cannot use the vehicle normally. Optionally, the permission to use the vehicle is provided by the vehicle for the first user when the vehicle obtains the fourth authentication result indicating that the authentication succeeds.

In some embodiments, when the fifth authentication result indicates that the authentication fails, the vehicle may output fourth prompt information. For details, refer to the description in S503 in FIG. 6 above in which the vehicle may output the fourth prompt information when the obtained authentication result indicates that the authentication fails.

In some embodiments, when the fifth authentication result indicates that the authentication fails, the vehicle may trigger the identity authentication performed in a third manner, that is, perform the identity authentication on the current user in the third manner. For the third manner, refer to the description of the third manner in S503 in FIG. 6. Optionally, an individual identification degree of the third manner is higher than an individual identification degree of driving feature authentication. For example, the third manner is biological feature authentication. Optionally, for an example in which the vehicle performs a corresponding operation based on an authentication result in the third manner, refer to the description in which the vehicle performs the corresponding operation based on the authentication result obtained in S503.

It may be understood that, when the fifth authentication result indicates that the authentication succeeds, validity of the previous authentication result in the first manner may be continued, it is determined that the current user is still the authorized user, and the authentication on the user identity does not need to be performed in an authentication manner that causes interference to the user driving the vehicle, for example, the first manner. When the fifth authentication result indicates that the authentication fails, the identity authentication is performed on the current user in the third manner with the high individual identification degree. This further improves accuracy of identity identification.

In some embodiments, that the fifth authentication result indicates that the authentication succeeds may be understood as a premise that the fourth authentication result remains that the authentication succeeds. In other words, that the authentication result of the driving feature indicates that the authentication succeeds may be used to continue the validity of the authentication result in the first manner. Optionally, the vehicle may perform S702 to S705 for a plurality of times. Only when fifth authentication results obtained for the plurality of times all indicate that the authentication succeeds, the fourth authentication result remains that the authentication succeeds. When the obtained fifth authentication result indicates that the authentication fails, the fourth authentication result indicates that the authentication fails. For example, the user may first cooperate with the vehicle in a quiet and stable environment to perform the authentication in the first manner. In a subsequent process in which the user drives the vehicle, the vehicle performs the authentication based on the driving feature. In other words, the vehicle may perform S701 before the user drives the vehicle. After the user drives the vehicle, the vehicle performs S702 to S705 for the plurality of times, and an authentication result of the driving feature obtained each time may be used to determine whether the authentication result in the first manner is valid.

In this application, the driving feature may be used as a continuous authentication factor, and is used to determine validity of an authentication result of the biological feature with the high individual identification degree, and another feature. For example, when the authentication result of the driving feature indicates that the authentication succeeds, the validity of the authentication result of the another feature may be continued. This is imperceptible to the user, avoids a need for user cooperation to perform the identity authentication for a plurality of times in the driving process, reduces the interference to the user, and ensures the accuracy and stability of the identity authentication.

In some embodiments, after the vehicle limits the function of the vehicle, if the authentication result obtained by performing the identity authentication subsequently indicates that the authentication succeeds (for example, both the authentication results obtained based on the driving feature and in the first manner indicate that the authentication succeeds), the vehicle may cancel the limitation on the function of the vehicle. For example, the vehicle may output prompt information, to prompt the user that a related function is unlocked.

In addition to the foregoing example, in some other embodiments, when the vehicle performs the identity authentication, the feature extraction fails, and the driving feature cannot be obtained, the vehicle may perform the authentication on the current user in another manner. This is not limited thereto, and the vehicle may continue to collect the driving behavior data until the feature extraction succeeds.

In addition to the foregoing example, in some other embodiments, the manner in which the vehicle obtains the authentication result may not be comparing the obtained driving feature with the registered driving feature template, or may be analyzing the collected driving behavior data and/or the driving feature obtained through the feature extraction, to obtain the authentication result. For example, a status change of components such as a seat, a rearview mirror, and a steering wheel is obtained by analyzing the driving behavior data and/or the driving feature, which may be understood as that it is determined that the current user adjusts the components such as the seat, the rearview mirror, and the steering wheel. In this case, the vehicle may determine that the authentication result indicates that the authentication fails. The manner in which the authentication result is obtained is not limited in this application.

In addition to the foregoing example, in some embodiments, when the obtained authentication result indicates that the authentication succeeds, the vehicle may update, based on the driving feature used to obtain the authentication result, the driving feature template registered by the currently identified user (which may also be referred to as the user indicated by the authentication result).

In some embodiments, the vehicle may be connected to another device (for example, a terminal device). After obtaining the authentication result, the vehicle may send the authentication result to the another device. The another device may determine, based on the authentication result, whether a user using the another device is the authorized user. Specific examples are shown in FIG. 9G-1 and FIG. 9G-2 and FIG. 9H-1 and FIG. 9H-2 below. Optionally, that the vehicle determines to trigger the identity authentication may include that the another device sends a request message (for example, a message used to request to obtain the authentication result) to the vehicle.

In some embodiments, that the obtained authentication result indicates that the authentication fails is specifically that an authentication factor is collected, but authentication performed on the authentication factor fails. In some other embodiments, that the obtained authentication result indicates that the authentication fails is specifically that no authentication factor is collected, and it is determined that the authentication fails.

In some embodiments, the vehicle may determine, based on a risk level of a service that triggers the identity authentication, the manner in which the identity authentication is performed. Optionally, when the risk level is greater than or equal to a first level, the vehicle may perform the identity authentication on the user based on the driving feature, the biological feature, and another feature (for example, the process shown in FIG. 7). When the risk level is less than the first level, the vehicle may directly perform the identity authentication on the user based on the driving feature (for example, the process shown in FIG. 6), or first perform the identity authentication in the first manner and subsequently perform the continuous authentication based on the driving feature (for example, the process shown in FIG. 8). Optionally, when the risk level is less than the first level, if the vehicle is in the driving process, the identity authentication may be directly performed on the user based on the driving feature. If the vehicle is not in the driving process, the identity authentication may be first performed in the first manner, and the continuous authentication is subsequently implemented based on the driving feature.

For example, when determining that the service that triggers the identity authentication is a service with a high risk level, for example, personal information viewing or a payment service, the vehicle may perform the identity authentication on the user based on the driving feature, the biological feature, and another feature. When determining that the service that triggers the identity authentication is a service with a low risk level, for example, starting an air conditioner, opening a window, performing navigation, or playing music, the vehicle may directly perform the identity authentication on the user based on the driving feature, or first perform the identity authentication based on the biological feature and subsequently implement the continuous authentication based on the driving feature.

In some embodiments, the vehicle shown in the foregoing embodiment is the vehicle 100 shown in FIG. 1A and FIG. 1B. The vehicle may collect the driving behavior data by using a sensor module 160, interact with the another device by using the transceiver 130, for example, obtain historical driving data or the driving feature template from the another device, and send the authentication result to the another device, and perform at least one of the following operations by using the processor 110 and/or the vehicle-mounted computer 140: performing the feature extraction, registering the driving feature, updating the driving feature template, obtaining the authentication result, determining whether the authentication result is valid, and the like.

In some embodiments, the vehicle shown in the foregoing embodiment may include at least one collection module and a driving feature authentication module. The at least one collection module may be configured to collect the driving behavior data. For example, a steering wheel recording module is configured to collect driving behavior data related to the steering wheel, for example, a posture of holding the steering wheel, a contact area and a contact position between a palm and the steering wheel, and a manner in which the steering wheel is operated. Afoot stepping component recording module is configured to collect driving behavior data of at least one of a brake, an accelerator, and a clutch, for example, a speed, pressure, a depth, and a timestamp of the foot stepping component. A switch record template is configured to collect driving behavior data related to the switch, such as timing of operating a vehicle door switch, a vehicle window switch, and a turn signal switch. The driving feature authentication module may receive collected driving behavior data sent by at least one collection monitoring module, and perform, based on the collected driving behavior data, at least one of the following operations: performing the feature extraction, registering the driving feature, updating the driving feature template, obtaining the authentication result, determining whether the authentication result is valid, and the like. This is not limited thereto. A part or all of the at least one collection module may be integrated into the driving feature authentication module. For example, the driving feature template includes a driving data collection module. The driving data collection module may receive the driving behavior data collected by the collection module, or may independently collect the driving behavior data.

In some embodiments, the vehicle shown in the foregoing embodiment may include a self-driving system and the driving feature authentication module. The driving feature module may receive one or more of an environment parameter, a driving scenario, and a reference driving policy that are sent by the self-driving system. Optionally, the driving feature module may classify the driving behavior data based on the driving scenario and/or the environment parameter, to obtain classified driving behavior data. Optionally, the driving feature module may perform the feature extraction according to the reference driving policy and based on the driving behavior data.

In some embodiments, the vehicle shown in the foregoing embodiment may include the driving feature authentication module, and the driving feature authentication module may include the driving data collection module, a driving data processing module, a driving feature extraction module, and a driving feature comparison module. The driving data collection module may be configured to: obtain various types of original driving behavior data, obtain integrated driving behavior data, and send the integrated driving behavior data to the driving data processing module. The driving data processing module may be configured to: classify the integrated driving behavior data based on the obtained driving scenario and/or environment parameter, obtain the classified driving behavior data, and send the classified driving behavior data to the driving feature extraction module. The driving feature extraction module may be configured to perform the feature extraction according to the obtained reference driving policy and based on the classified driving behavior data, for example, perform the feature extraction by using a preset driving feature extraction algorithm. The driving feature successfully obtained when the driving feature extraction module performs the feature extraction may be sent to the driving feature comparison module, or may be sent to a storage module. The driving feature comparison module may be configured to obtain the matching result and/or the authentication result based on the driving feature and the registered driving feature template.

In some embodiments, the vehicle shown in the foregoing embodiment may include the driving feature authentication module and a first authentication module. The driving feature authentication module is configured to perform the identity authentication based on the driving feature, to obtain the authentication result of the driving feature. The first authentication module is configured to perform the identity authentication based on a first authentication factor (for example, the biological feature, a password, or a PIN code) other than the driving feature, to obtain an authentication result of the first authentication factor. Optionally, the vehicle shown in the foregoing embodiment may include a user identity authentication module. Optionally, the user identity authentication module may be integrated with the driving feature authentication module and/or the first authentication module. Optionally, the user identity authentication module may indicate the driving feature authentication module to perform the authentication, for example, indicate to perform the continuous authentication. Optionally, the user identity authentication module may be configured to manage the authentication result obtained by the first authentication module, for example, determine whether the authentication result is valid or whether the authentication result is deleted. Optionally, the user identity authentication module may obtain a converged authentication result based on the authentication result of the driving feature and the authentication result of the first authentication factor.

The following describes an example of an application scenario in embodiments of this application.

In some embodiments, when the vehicle does not identify the current user, if the driving feature is obtained by performing the feature extraction, the prompt information may be output by using the vehicle-mounted computer. A specific example is shown in FIG. 9A-1 and FIG. 9A-2 below.

FIG. 9A-1 and FIG. 9A-2 are an example of a schematic diagram of a user interface embodiment. An upper figure in FIG. 9A-1 and FIG. 9A-2 shows a user interface before a login control 312B is taped, and a lower figure in FIG. 9A-1 and FIG. 9A-2 shows a user interface after the login control 312B is taped.

As shown in the upper figure in FIG. 9A-1 and FIG. 9A-2, when a vehicle-mounted computer 140 does not identify a current user and obtains a driving feature by performing feature extraction, a user interface 310 may be displayed. The user interface 310 may include user information 311 and prompt information 312. The user information 311 may include profile picture information 311A and name information 311B. The user information 311 may indicate whether an account is logged in. As shown in the upper figure in FIG. 9A-1 and FIG. 9A-2, the profile picture information 311A is a default profile picture, and the name information 311B is "Not logged in", and may indicate that no account is logged in.

The prompt information 312 may include prompt content 312A, the login control 312B, and a registration control 312C. Optionally, the prompt information 312 may be the first prompt information described in S103 in FIG. 2. The prompt content 312A may include words: "Your driving feature is extracted. Please log in to your account to register the driving feature. If you do not have an account, register one". The registration control 312C may be used to register the account. The vehicle-mounted computer 140 may receive a touch operation (for example, a tap operation) performed on the registration control 312C, and in response to the touch operation, register an identity template for the current user in a first manner. The touch operation may be understood as a user operation used to register a user identity. The login control 312B may be used to log in to the account. The vehicle-mounted computer 140 may receive a touch operation (for example, a tap operation) performed on the login control 312B, and in response to the touch operation, perform authentication on the current user in the first manner, for example, display a user interface 320 shown in the lower figure in FIG. 9A-1 and FIG. 9A-2. The touch operation may be understood as a user operation used to perform identity authentication. The first manner is, for example, but is not limited to, vehicle key authentication, password authentication, biological feature authentication, PIN code authentication, or connected device authentication.

As shown in the lower figure in FIG. 9A-1 and FIG. 9A-2, the vehicle-mounted computer 140 may display the user interface 320, to obtain an authentication factor, and perform the identity authentication based on the authentication factor. The user interface 320 may include the user information 311, a first login option 321, a second login option 322, and a third login option 323. The first login option 321 includes words: "Account and password login", which may indicate that a corresponding authentication manner is the password authentication, and a corresponding authentication factor includes the password. The second login option 322 includes words "Verification code login", which may indicate that a corresponding authentication manner is verification code authentication, and a corresponding authentication factor includes a phone number and a verification code received by using the phone number. The third login option 323 includes a word "Face login", which may indicate that a corresponding authentication manner is facial authentication, and a corresponding authentication factor is facial data.

As shown in the lower figure in FIG. 9A-1 and FIG. 9A-2, the first login option 321 is in a selected state, and the user interface 320 may include information related to the password authentication, for example, an input box 321A for entering the account, an input box 321B for entering the password, and a login control 321C. The vehicle-mounted computer 140 may receive a user operation performed on the input box 321A, to receive the account entered by the user, and may receive a user operation performed on the input box 321B, to receive the password entered by the user. After receiving the account and the password, the vehicle-mounted computer 140 may receive a touch operation performed on the login control 321C, and in response to the touch operation, may perform verification on the received account and password, which may be understood as that the identity authentication is performed in the password authentication manner.

The vehicle-mounted computer 140 may receive a touch operation performed on the second login option 322, and in response to the touch operation, display information related to the verification code authentication, for example, an input box for entering the phone number and the verification code, to perform the identity authentication in the verification code authentication manner. Alternatively, the vehicle-mounted computer 140 may receive a touch operation performed on the third login option 323, and in response to the touch operation, display information related to the facial authentication, for example, a preview box of a captured image, to perform the identity authentication in the facial authentication manner.

In some embodiments, after the vehicle-mounted computer 140 performs the identity authentication, if an authentication result indicates that the authentication succeeds, the vehicle-mounted computer 140 may register, for an identified first user, the driving feature obtained through the feature extraction. In some embodiments, after the vehicle-mounted computer 140 performs the identity authentication, if the authentication result indicates that the authentication fails, the vehicle-mounted computer 140 may perform the identity authentication again, and if the authentication result still indicates that the authentication fails, delete the driving feature obtained through the feature extraction.

In some embodiments, when the vehicle-mounted computer 140 registers the identity template for the current user in the first manner, a displayed user interface is similar to that shown in the lower figure in FIG. 9A-1 and FIG. 9A-2, and may further include an input box for entering other information, which is not described one by one.

In some embodiments, when the vehicle identifies the current user, if the driving feature is obtained by performing the feature extraction, prompt information may be output by using the vehicle-mounted computer, to prompt the user to register the driving feature. A specific example is shown in FIG. 9B below.

FIG. 9B is an example of a schematic diagram of another user interface embodiment.

As shown in FIG. 9B, when the vehicle-mounted computer 140 identifies that the current user is the first user and obtains the driving feature by performing the feature extraction, a user interface 410 may be displayed. The user interface 410 may include user information 411 and prompt information 412. Similar to the user information 311 shown in FIG. 9A-1 and FIG. 9A-2, the user information 411 may include profile picture information 411A and name information 411B. As shown in FIG. 9B, the profile picture information 411A is a profile of the first user, and the name information 311B is an account name "First user" of the first user and may indicate that the account named "First user" is logged in.

The prompt information 412 may include prompt content 412A, an OK control 412B, and a cancel control 412C. Optionally, the prompt information 412 may be the second prompt information described in S205 in FIG. 3 above. The prompt content 412A may include words: "Your driving feature is extracted, and do you want to register the driving feature?". The OK control 412B may include a word "Yes". The vehicle-mounted computer 140 may receive a touch operation performed on the OK control 412B, and in response to the touch operation, register the driving feature for the first user corresponding to the currently logged in account. The cancel control 412C may include a word "No", and the vehicle-mounted computer 140 may receive a touch operation performed on the cancel control 412C, and in response to the touch operation, cancel display of the prompt information 412. In some embodiments, in response to the touch operation, the vehicle 100 may store the driving feature obtained through the feature extraction, so that the first user does not need to re-extract the driving feature when expecting to register the driving feature subsequently. In some other embodiments, in response to the touch operation, the vehicle 100 may delete the driving feature obtained through the feature extraction.

In some embodiments, after the user enters the vehicle, the vehicle may prompt the user to perform the identity authentication. For example, after the user fastens a seat belt and turns on the vehicle-mounted computer, the vehicle outputs prompt information by using the vehicle-mounted computer. The prompt information is similar to the prompt information 312 in the upper figure in FIG. 9A-1 and FIG. 9A-2, and may include the login control and the registration control. The user may operate the login control to perform a login operation (the vehicle-mounted computer may display the user interface 320 shown in the lower figure in FIG. 9A-1 and FIG. 9A-2), and the user may alternatively operate the registration control to perform a registration operation.

In some embodiments, after the vehicle prompts the user to perform the identity authentication, the user may directly drive the vehicle without performing the identity authentication. The vehicle may collect driving behavior data of the user, perform the feature extraction based on the collected driving behavior data to obtain a driving feature, and then obtain an authentication result based on the obtained driving feature. For an example in which the vehicle performs a corresponding operation based on the authentication result, refer to FIG. 9C to FIG. 9H-1 and FIG. 9H-2 below.

In some embodiments, when the authentication result obtained by the vehicle indicates that the authentication succeeds, the vehicle may output prompt information by using the vehicle-mounted computer. The prompt information may indicate that the current user is identified. A specific example is shown in FIG. 9C below.

FIG. 9C is an example of a schematic diagram of another user interface embodiment.

As shown in FIG. 9C, the vehicle-mounted computer 140 may display a user interface 510 when the obtained authentication result indicates that the authentication succeeds. The obtained authentication result is, for example, but is not limited to, the authentication result obtained in S503 in FIG. 6, or the third authentication result obtained in S605 in FIG. 7. The user interface 510 may include user information 511 and prompt information 512. For a description of the user information 511, refer to the description of the user information 311 in FIG. 9A-1 and FIG. 9A-2.

The prompt information 512 may include prompt content 512A, an OK control 512B, and a cancel control 512C. Optionally, the prompt information 512 may be the third prompt information described in S503 in FIG. 6 above. The prompt content 512A may include words: "An account of a user who is currently driving the vehicle is identified as the first user. Do you want to log in?".

The OK control 512B may include a word "Yes". The vehicle-mounted computer 140 may receive a touch operation performed on the OK control 512B, and in response to the touch operation, directly log in to the account of the first user. In this case, the user information 511 may change to a logged-in state. For details, refer to the description of the user information 411 shown in FIG. 9B. In some embodiments, after the vehicle-mounted computer 140 logs in to the account of the first user, the current user can normally use the vehicle, for example, play music, navigate, view video data recorded by a dashboard camera, and view personal information on the vehicle-mounted computer 140. In some embodiments, after the vehicle-mounted computer 140 logs in to the account of the first user, the vehicle may provide a corresponding service for the first user based on stored configuration information of the first user, for example, seat height and rearview mirror setting manners or favorite music playing.

The cancel control 512C may include a word "No", and the vehicle-mounted computer 140 may receive a touch operation performed on the cancel control 512C, and in response to the touch operation, cancel display of the prompt information 512. In this case, the user information 511 may remain unchanged. In some embodiments, after the vehicle-mounted computer 140 cancels the display of the prompt information 512, the current user can use only some functions of the vehicle, for example, can normally drive the vehicle, but cannot use a function with a high security level on the vehicle-mounted computer 140, for example, can only play music and navigate, but cannot view favorite music, a historical navigation route, a frequently navigated destination, the personal information, or the like.

In some embodiments, after obtaining the authentication result of the driving feature, the vehicle-mounted computer 140 may perform the authentication in another authentication manner. For example, the another authentication manner is an authentication manner that has small interference to the user, for example, voiceprint authentication or the facial authentication. Optionally, after logging in to the account of the first user, the vehicle-mounted computer 140 may perform the authentication in the another authentication manner after first duration. After the vehicle-mounted computer 140 cancels the display of the prompt information 512, the vehicle-mounted computer 140 may perform the authentication in the another authentication manner after second duration, where the second duration is less than the second duration. In other words, an authentication interval after the account is logged in is shorter than an authentication interval when the account is not logged in.

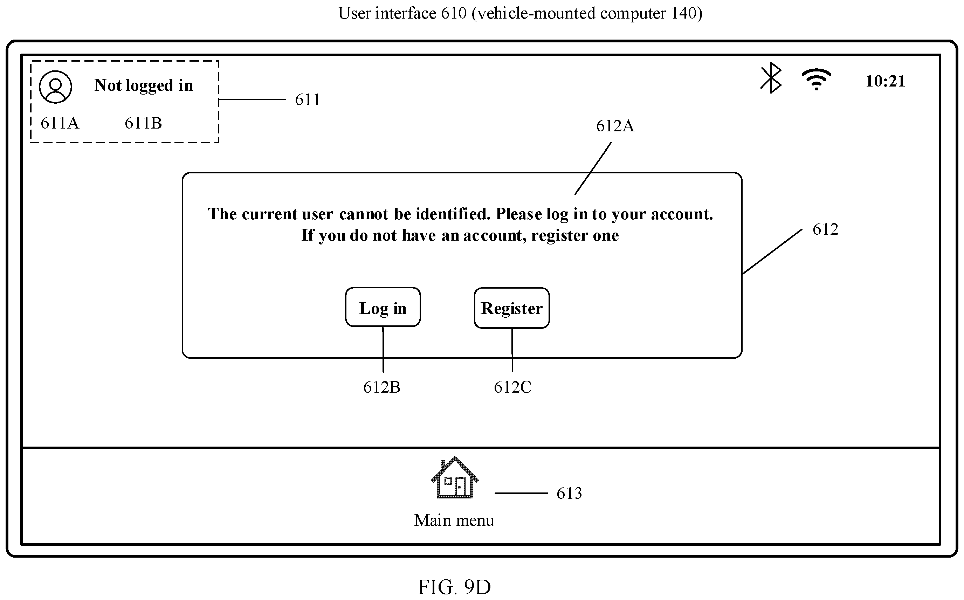

In some embodiments, when an authentication result obtained by performing the authentication in the another manner indicates that the authentication succeeds, the current user can normally use the vehicle. In some other embodiments, when the authentication result obtained by performing the authentication in the another manner indicates that the authentication fails, the vehicle may perform at least one of the following: triggering the identity authentication again (a specific example is similar to that in FIG. 9D below), limiting the function of the vehicle (a specific example is similar to that in FIG. 9E-1 and FIG. 9E-2 below), deleting a driving feature template of the first user, and triggering update of the driving feature template of the first user.

In some embodiments, when the authentication result obtained by the vehicle indicates that the authentication fails, the vehicle may output prompt information by using the vehicle-mounted computer, to prompt the user to perform the authentication again. A specific example is shown in FIG. 9D below.

FIG. 9D is an example of a schematic diagram of another user interface embodiment.

As shown in FIG. 9D, the vehicle-mounted computer 140 may display a user interface 610 when the obtained authentication result indicates that the authentication fails. The obtained authentication result is, for example, but is not limited to, the authentication result obtained in S503 in FIG. 6, or the third authentication result obtained in S605 in FIG. 7. The user interface 610 may include user information 611, prompt information 612, and a menu control 613. For a description of the user information 511, refer to the description of the user information 311 in FIG. 9A-1 and FIG. 9A-2.

The prompt information 612 may include prompt content 612A, a login control 612B, and a registration control 612C. The prompt content 612A may include words: "The current user cannot be identified. Please log in to your account. If you do not have an account, register one". The login control 612B and the registration control 612C are similar to the login control 312B and the registration control 312C in FIG. 9A-1 and FIG. 9A-2, and details are not described again.

In some embodiments, the vehicle-mounted computer 140 receives a user operation (for example, a touch operation performed on the login control 612B). After performing the authentication in the first manner, if the authentication result indicates that the authentication succeeds, the vehicle-mounted computer 140 may directly log in to the account of the first user. In this case, the user information 611 may change to the logged-in state. For details, refer to the description of the user information 411 shown in FIG. 9B. Optionally, if the authentication result indicates that the authentication succeeds, the vehicle may update the registered driving feature template of the first user based on the obtained driving feature. In some other embodiments, if the authentication result indicates that the authentication fails, the function of the vehicle may be limited, for example, an embodiment shown in FIG. 9E-1 and FIG. 9E-2 below.

In some embodiments, the vehicle-mounted computer 140 receives a user operation (for example, a touch operation performed on the registration control 612C). After registering the identity template for the current user in the first manner, the vehicle-mounted computer 140 may directly log in to the account of the registered first user (for example, perform the authentication by using the identity template of the registered first user). In this case, the user information 611 may change to the logged-in state. For details, refer to the description of the user information 411 shown in FIG. 9B. Optionally, after registering the identity template for the current user in the first manner, the vehicle-mounted computer 140 may trigger a process of registering the driving feature template.

In some other embodiments, when the user does not perform the identity authentication or register the identity template, the function of the vehicle may be limited. For example, the vehicle-mounted computer 140 may receive a touch operation performed on the menu control 613, and in response to the touch operation, display a menu interface shown in an upper figure in FIG. 9E-1 and FIG. 9E-2 below. The touch operation may be understood as a user operation used to cancel the identity authentication. For another example, the vehicle-mounted computer 140 does not receive any user operation within a third preset period of time.

In some embodiments, when the authentication result obtained by the vehicle indicates that the authentication fails, the function of the vehicle may be limited. A specific example is shown in FIG. 9E-1 and FIG. 9E-2 below.

FIG. 9E-1 and FIG. 9E-2 are an example of a schematic diagram of another user interface embodiment. An upper figure in FIG. 9E-1 and FIG. 9E-2shows a user interface before a control 621A is taped, and a lower figure in FIG. 9E-1 and FIG. 9E-2 shows a user interface after the control 621A is taped.

As shown in the upper figure in FIG. 9E-1 and FIG. 9E-2, the vehicle-mounted computer 140 may display a user interface 620. The user interface 620 may include the user information 611 and an icon 621, and for a description of the user information 611, refer to the description of the user information 311 in FIG. 9A-1 and FIG. 9A-2. The icon 621 may include a plurality of icons, such as a navigation icon, a phone icon, the music icon 621A, a video icon, a file icon, a radio icon, a dashboard camera icon, and a settings icon.

In some embodiments, the vehicle-mounted computer 140 may receive a touch operation performed on any one of the icons (for example, the music icon 621A), and in response to the touch operation, determine whether the current user is an authorized user, for example, determine, based on the currently obtained authentication result or the stored authentication result, whether the current user is the authorized user. In some embodiments, if the current user is the authorized user, the vehicle-mounted computer 140 may display a user interface of an application corresponding to the icon, for example, a user interface of music. In some other embodiments, if the current user is not the authorized user, the vehicle-mounted computer 140 may output prompt information, to prompt that the current user is not the authorized user, that is, the current user cannot view the user interface of the application corresponding to the icon. For example, the vehicle-mounted computer 140 may display a user interface 630 shown in the lower figure in FIG. 9E-1 and FIG. 9E-2

As shown in the lower figure in FIG. 9E-1 and FIG. 9E-2 the vehicle-mounted computer 140 may display the user interface 630, and the user interface 630 may include the user information 611 and prompt information 631. The prompt information 631 may include prompt content 631A, a login control 631B, and a registration control 631C. The prompt content 631A may include words: "A music function is not unavailable. The function is available after you log in to your account. If you do not have an account, register one". The login control 631B and the registration control 631C are similar to the login control 312B and the registration control 312C in FIG. 9A-1 and FIG. 9A-2, and details are not described again.

In some embodiments, the vehicle-mounted computer 140 receives a user operation (for example, a touch operation performed on the login control 631B) used to perform the identity authentication. After performing the authentication in the first manner, if the authentication result indicates that the authentication succeeds, the vehicle-mounted computer 140 may directly log in to the account of the first user, and display the user interface of the application corresponding to the icon. In this case, the user information 611 may change to the logged-in state. For details, refer to the description of the user information 411 shown in FIG. 9B.

In some other embodiments, if the authentication result indicates that the authentication fails, the function of the vehicle may be further limited. For example, before the authentication of the first manner fails, a function other than a function of normally driving the vehicle (for example, use of the music function of the vehicle-mounted computer 140) is limited. After the authentication of the first manner fails, the function of normally driving the vehicle is also limited. For example, a navigation function of the vehicle-mounted computer 140 cannot be used, a driving speed of the vehicle is limited, and the vehicle enables a self-driving function.

In some embodiments, the vehicle-mounted computer 140 receives a user operation (for example, a touch operation performed on the registration control 631C) used to register the user identity. After registering the identity template for the current user in the first manner, the vehicle-mounted computer 140 may directly log in to the account of the registered first user (for example, perform the authentication by using the identity template of the registered first user), and display the user interface of the application corresponding to the icon. In this case, the user information 611 may change to the logged-in state. For details, refer to the description of the user information 411 shown in FIG. 9B.

In some other embodiments, when the user does not perform the identity authentication or register the identity template (a specific example is similar to that in FIG. 9D above), the function of the vehicle may be further limited. Optionally, after a fourth preset period of time after the prompt information 631 is output, the function of the vehicle may be further limited. A specific example is similar to the foregoing description in which the function of the vehicle may be further limited if the authentication result indicates that the authentication fails.

In some other embodiments, after prompting the user to perform the identity authentication, the vehicle may receive the user operation used to perform the identity authentication, and perform the identity authentication in the first manner to obtain the authentication result. In some other embodiments, when the obtained authentication result indicates that the authentication succeeds, the vehicle may determine that the current user is the authorized user (which may also be understood as that the vehicle identifies the first user), and the first user can normally use the vehicle. For example, the first user may operate a driving component to drive, and use most functions of the vehicle-mounted computer 140. Then, the first user can drive the vehicle. In some other embodiments, when the obtained authentication result indicates that the authentication fails, the vehicle may determine that the current user is not the authorized user, and the function of the vehicle may be limited. For example, the user cannot operate the driving component to drive, and cannot use any function on the vehicle-mounted computer 140.

In some embodiments, when the authentication result (referred to as the authentication result in the first manner for short below) obtained by performing the identity authentication in the first manner indicates that authentication succeeds, the vehicle may log in to the account of the first user, may collect the driving behavior data of the user, perform the feature extraction based on the collected driving behavior data to obtain the driving feature, and then obtain the authentication result (referred to as the authentication result of the driving feature) based on the obtained driving feature. Optionally, the authentication result of the driving feature may be used to determine whether the authentication result in the first manner remains that the authentication succeeds, or may be referred to as being used to determine whether the authentication result in the first manner is valid. Optionally, when the authentication result in the first manner indicates that the authentication succeeds, the vehicle may subsequently perform the authentication on the driving feature for a plurality of times, and determine, based on an authentication result of the driving feature obtained each time, whether the authentication result in the first manner is valid, which may be understood as that the driving feature is used as a continuous authentication factor to identify the user identity. Optionally, the authentication result of the driving feature indicates that the authentication succeeds, and may be used to continue validity of the authentication result in the first manner, or may be understood as that the authentication result of the driving feature is used to extend valid duration of the authentication result in the first manner.

Optionally, the authentication result in the first manner and the authentication result of the driving feature are respectively the second authentication result and the first authentication result in FIG. 7.

Optionally, the authentication result in the first manner and the authentication result of the driving feature are respectively the fourth authentication result and the fifth authentication result in FIG. 8.

In some embodiments, when the authentication result of the driving feature indicates that the authentication succeeds, the authentication result in the first manner remains that the authentication succeeds, and the first user can continue to use the vehicle normally.

In some other embodiments, when the authentication result of the driving feature indicates that the authentication fails, the vehicle may trigger the identity authentication again (a specific example is similar to that in FIG. 9D) and/or limit the function of the vehicle (a specific example is similar to that in FIG. 9E-1 and FIG. 9E-2).

In some other embodiments, when the authentication result of the driving feature indicates that the authentication fails, the vehicle may output prompt information by using the vehicle-mounted computer, to prompt the user to perform the identity authentication again. A specific example is shown in FIG. 9F-1 and FIG. 9F-2 below.

FIG. 9F-1 and FIG. 9F-2 are an example of a schematic diagram of another user interface embodiment. An upper figure in FIG. 9F-1 and FIG. 9F-2 is a user interface before the authentication result of the driving feature indicating that the authentication fails is obtained, and a lower figure in FIG. 9F-1 and FIG. 9F-2 is a user interface after the authentication result of the driving feature indicating that the authentication fails is obtained.

As shown in the upper figure in FIG. 9F-1 and FIG. 9F-2, after obtaining the authentication result in the first manner indicating that the authentication succeeds, the vehicle-mounted computer 140 may display a user interface 910. The user interface 910 may include user information 911. For a description of the user information 911, refer to the description of the user information 411 in FIG. 9B. The user information 911 may be used to indicate that the account of the first user is logged in. The user interface 910 may include a window 912 of a music application and a window 913 of a navigation application. The window 912 of the music application may indicate that the first user can normally use the music application, and the window 913 of the navigation application may indicate that the first user can normally use the navigation application.

In some embodiments, when obtaining the authentication result of the driving feature and the authentication result indicates that the authentication fails, the vehicle-mounted computer 140 may output prompt information. Optionally, in a fifth preset period of time after the prompt information is output, some functions of the vehicle may be limited. For example, when the authentication result of the driving feature indicates that the authentication fails, the vehicle-mounted computer 140 may display the user interface 910 shown in the lower figure in FIG. 9F-1 and FIG. 9F-2. As shown in the lower figure in FIG. 9F-1 and FIG. 9F-2, prompt information 912A, a login control 912B, and a cancel control 912C are displayed on the window 912 of the music application. The prompt information 912A may include words: "The music application is unavailable. Please log in to your account again within 10 minutes". In this case, the music application cannot play music properly. In addition, the user information 911 may change to a non-logged-in state. For details, refer to the description of the user information 311 in FIG. 9A-1 and FIG. 9A-2. Optionally, the prompt information 912A may be the fourth prompt information in S503 in FIG. 6 above, and the fifth preset period of time is the second preset period of time in S503 in FIG. 6 above.

The login control 912B is similar to the login control 312B in FIG. 9A-1 and FIG. 9A-2. In some embodiments, within the fifth preset period of time after the prompt information is output, the vehicle receives a user operation (for example, a touch operation performed on the login control 912B) used to perform the identity authentication, and performs the identity authentication on the user. Optionally, the identity authentication manner may be the third manner in S705 in FIG. 8, for example, the authentication manner that has a high individual identification degree and has small interference to the user, for example, the facial authentication or the voiceprint authentication. After the authentication result of the driving feature indicating that the authentication fails is obtained, the authentication is performed again in such an authentication manner, so that accuracy of the authentication can be ensured, the interference to the user driving the vehicle can be reduced as much as possible, and availability is high.

In some embodiments, when the authentication result obtained by performing the identity authentication indicates that the authentication succeeds, the vehicle may cancel the limitation on the function (for example, the some functions limited within the fifth period of time described above) of the vehicle. For example, the lower figure in FIG. 9F-1 and FIG. 9F-2 is changed to the upper figure in FIG. 9F-1 and FIG. 9F-2.

In some other embodiments, when the authentication result obtained by performing the identity authentication indicates that the authentication fails, more functions of the vehicle may be limited. For example, the window 913 of the navigation application also displays prompt information, and the navigation application is unavailable.

In some other embodiments, within the fifth preset period of time after the prompt information is output, the vehicle receives a user operation (for example, a touch operation performed on the cancel control 912C) used to cancel the identity authentication, and more functions of the vehicle can be limited.

In some other embodiments, if the identity authentication is still not performed by the user within the fifth preset period of time after the prompt information is output, for example, no user operation is received, more functions of the vehicle can be limited.

In some embodiments, after obtaining the authentication result, the vehicle may send the authentication result to another device, and the another device may determine, based on the authentication result, whether a user using the another device is the authorized user. Specific examples are shown in FIG. 9G-1 and FIG. 9G-2 and FIG. 9H-1 and FIG. 9H-2 below.

FIG. 9G-1 and FIG. 9G-2 and FIG. 9H-1 and FIG. 9H-2 provide descriptions by using an example in which the vehicle-mounted computer 140 of the vehicle 100 is connected to a terminal 200 through Bluetooth.

FIG. 9G-1 and FIG. 9G-2 are an example of a schematic diagram of another user interface embodiment. In FIG. 9G-1 and FIG. 9G-2, an example in which the authentication result indicates that the authentication succeeds is used for description.

As shown in FIG. 9G-1 and FIG. 9G-2, the terminal 200 may display a user interface 710. In some embodiments, the user interface 710 may be a lock screen interface, and the user can normally use the terminal 200 only when the identity authentication succeeds. The user interface 710 may include a Bluetooth identifier 711 and prompt information 712. The Bluetooth identifier 711 may indicate that Bluetooth is enabled, and the terminal 200 may be connected to the vehicle-mounted computer 140 through Bluetooth. When receiving a user operation used to trigger the identity authentication, the terminal 200 may send, to the vehicle-mounted computer 140, a request message used to request to obtain the authentication result. After the terminal 200 receives the user operation used to trigger the identity authentication and before the terminal 200 identifies the current user, the prompt information 712 may display a word: "Identifying...". The user operation used to trigger the identity authentication is, for example, but is not limited to, a lifting operation, a touch operation performed on a display, and voice information. After receiving the request message sent by the terminal 200, the vehicle-mounted computer 140 may perform the authentication on the user (for example, a driver driving the vehicle 100) in the vehicle 100, and obtain the authentication result. For an example of the authentication process, refer to the procedures shown in FIG. 6 to FIG. 8 above. The vehicle-mounted computer 140 may send the obtained authentication result to the terminal 200.

As shown in FIG. 9G-1 and FIG. 9G-2, the vehicle-mounted computer 140 may display a user interface 810. The user interface 810 may include user information 811, a Bluetooth identifier 812, and icons of a plurality of applications. For the user information 811, refer to the description of the user information 411 in FIG. 9B. The user information 811 may indicate that the account named "First user" is logged in. In other words, the vehicle-mounted computer 140 identifies the current user as the authorized first user, and the authentication result sent by the vehicle-mounted computer 140 to the terminal 200 indicates that the authentication succeeds. The Bluetooth identifier 812 may indicate that Bluetooth is enabled, and the vehicle-mounted computer 140 may be connected to the terminal 200 through Bluetooth.

As shown in FIG. 9G-1 and FIG. 9G-2, after receiving the authentication result sent by the vehicle-mounted computer 140, the terminal 200 may determine, based on the authentication result, whether the user that currently triggers the authentication is the authorized user. If the authentication result indicates that the authentication succeeds, the terminal 200 determines that the current user is the authorized user, and may display an unlocked user interface 720. The user interface 720 is, for example, a home screen of the terminal 200.

In some other embodiments, if the authentication result received by the terminal 200 indicates that the authentication fails, the terminal 200 may perform the authentication again, for example, display a user interface 730 shown in FIG. 9H-1 and FIG. 9H-2 below.

FIG. 9H-1 and FIG. 9H-2 are an example of a schematic diagram of another user interface embodiment. In FIG. 9H-1 and FIG. 9H-2, an example in which the authentication result indicates that the authentication fails is used for description.

As shown in FIG. 9H-1 and FIG. 9H-2, the vehicle-mounted computer 140 may display the user interface 610. For the description of the user interface 610, refer to the description of the user interface 610 in FIG. 9D. The user interface 610 may indicate that the vehicle-mounted computer 140 cannot identify the current user, and the authentication result sent by the vehicle-mounted computer 140 to the terminal 200 indicates that the authentication fails.

As shown in FIG. 9H-1 and FIG. 9H-2, after receiving the authentication result sent by the vehicle-mounted computer 140, the terminal 200 may determine, based on the authentication result, whether the user that currently triggers the authentication is the authorized user. If the authentication result indicates that the authentication fails, the terminal 200 determines that the current user is not the authorized user, and may perform the authentication again, for example, display the user interface 730. The user interface 730 may include prompt information 731, a fingerprint icon 732, an input box 733, and a numeric keyboard 734. The prompt information may include words: "Identity identification failed. Please perform the authentication again". The fingerprint icon 732 may be used to perform fingerprint authentication. The terminal 200 may receive a touch operation performed on the fingerprint icon 732, collect fingerprint information, and perform the identity authentication based on the fingerprint information. The input box 733 and the numeric keyboard 734 may be used to perform password authentication. The terminal 200 may receive a touch operation performed on the numeric keyboard 734, to receive a password entered by the user. The input box 733 may be used to display the password entered by the user. The terminal 200 may perform the identity authentication based on the received password.

In addition to the foregoing example, in some embodiments, when the vehicle determines that the authentication result obtained previously is invalid (for example, when the fourth authentication result in S705 in FIG. 8 is invalid), the vehicle may output prompt information by using the vehicle-mounted computer, words like: "The current logged-in account is invalid. Please log in to your account again".

It may be understood that the foregoing user interfaces are merely examples. When the information used to prompt the user to perform the identity authentication is output for registering the identity template or in a case in which the obtained authentication result indicates that the authentication fails, the login control and the registration control may be displayed (as shown in FIG. 9D). The login control and the cancel control (as shown in the lower figure in FIG. 9F-1 and FIG. 9F-2) may alternatively be displayed. In other words, the control may be displayed, so that the user enters the user operation used to register the user identity, or the control may be displayed, so that the user enters the user operation used to cancel the identity authentication, or both of the controls may be displayed by default. Alternatively, a corresponding control may be displayed based on an actual scenario. For example, the cancel control is not displayed when the function (for example, the navigation function is unavailable or the speed is limited) of normally driving the vehicle is limited due to a failure to identity the current user. This is not limited in this application.

FIG. 10 is a schematic flowchart of another identity authentication method according to an embodiment of this application. The method may be applied to a vehicle, for example, the vehicle 100 shown in FIG. 1A and FIG. 1B. The method may include but is not limited to the following steps.

S801: The vehicle performs authentication on a user identity in a first authentication manner.

Specifically, the first authentication manner is not driving feature authentication, and the first authentication manner is, for example, but is not limited to, vehicle key authentication, password authentication, biological feature authentication, PIN code authentication, or connected device authentication. Optionally, the first authentication manner is an authentication manner that has small interference to a user, for example, facial authentication or voiceprint authentication. For a specific authentication process, refer to the descriptions of the foregoing common authentication manners.

In some embodiments, S801 is similar to S201 in FIG. 3, and the first authentication manner is the first manner in S201. For details, refer to the description of S201 in FIG. 3.

S802: The vehicle enables permission to use a first function of the vehicle when the authentication performed on the user identity in the first authentication manner succeeds.

In some embodiments, when the authentication performed on the user identity in the first authentication manner succeeds, the vehicle may determine that the identity of the user is authorized (which may also be referred to as that a current user is an authorized user), and the user can use the first function of the vehicle. Optionally, the first function may be all functions of the vehicle. Optionally, the first function may be some functions of the vehicle. The first function includes, for example, but is not limited to, adjusting components such as a seat, a rearview mirror, and a seat belt, operating driving components such as a steering wheel, a gear shifter, an accelerator, and a brake, and using functions such as navigation, music, and personal information viewing on a vehicle-mounted computer.

In some embodiments, when the authentication performed on the user identity in the first authentication manner succeeds, the vehicle directly enables the first function, for example, directly opens a navigation application, or directly opens a music application to play music. In some other embodiments, after the vehicle enables the permission to use the first function of the vehicle, the vehicle may receive a user operation, and enable the first function in response to the user operation.

In some embodiments, for an example of an operation performed by the vehicle when the authentication performed on the user identity in the first authentication manner succeeds, refer to the description in S503 in FIG. 6 in which the operation is performed when the authentication result obtained by the vehicle indicates that the authentication succeeds.

S803: The vehicle collects first driving data of the user, and performs the authentication on the user identity based on the first driving data.

In some embodiments, S803 is similar to S702 to S704 in FIG. 8. The first driving data may include the driving behavior data in S702 to S704. For details, refer to the descriptions of S702 to S704 in FIG. 8.

S804: The vehicle disables the permission to use the first function when the authentication performed on the user identity based on the first driving data fails.

In some embodiments, the vehicle keeps the permission to use the first function enabled when the authentication performed on the user identity based on the first driving data succeeds.

In some embodiments, the vehicle may perform the authentication on the user identity in the first authentication manner again when the authentication performed on the user identity based on the first driving data fails, and the vehicle disables the permission to use the first function when the authentication performed on the user identity in the first authentication manner fails.

In some embodiments, the vehicle may output first information when the authentication performed on the user identity based on the first driving data fails. Optionally, the first information is used to prompt the user to perform the identity authentication, and the first information is similar to the fourth prompt information in S503 in FIG. 6. The first information is, for example, the prompt information 912A shown in the lower figure in FIG. 9F-1 and FIG. 9F-2.

In some embodiments, the vehicle receives a user operation used to perform the identity authentication, performs the authentication on the user identity in the first authentication manner, and disables the permission to use the first function when the authentication performed on the user identity in the first authentication manner fails. In some other embodiments, within a preset first period of time, if the vehicle does not receive the user operation used to perform the identity authentication, or receives a user operation used to cancel the identity authentication, the vehicle disables the permission to use the first function. The user operation used to perform the identity authentication is, for example, the touch operation performed on the login control 912B in the lower figure in FIG. 9F-1 and FIG. 9F-2, voice information (for example "Log in"), or a gesture. The user operation used to cancel the identity authentication is, for example, the touch operation performed on the cancel control 912C in the lower figure in FIG. 9F-1 and FIG. 9F-2, voice information (for example, "Do not log in"), or a gesture.

In some embodiments, the vehicle may first disable permission to use a second function of the vehicle when the authentication performed on the user identity based on the first driving data fails, then disable the permission to use the first function when the authentication performed on the user identity in the first authentication manner fails, and enable the permission to use the second function when the authentication performed on the user identity in the first authentication manner succeeds. The second function is different from the first function. Optionally, a range of the first function may be wider than a range of the second function. It may be understood that when the authentication performed on the user identity based on the first driving data fails, the vehicle first disables a part of the permission to use the first function, and when subsequent authentication performed on the user identity in the first authentication manner fails, disables all of the permission to use the first function. Optionally, the vehicle may first disable some permission to use the second function that has small impact on vehicle driving, and then disable some permission to use the first function that has great impact on the vehicle driving if the authentication fails again. For example, after the permission to use the first function is disabled, a driving speed of the vehicle is limited, a navigation function is unavailable, or some or all of the driving components cannot be used. In this case, the vehicle may perform self-driving. After the permission to use the second function is disabled, the music cannot be played, or components other than the driving components such as the seat and the rearview mirror cannot be operated.

In addition to the foregoing example, in some other embodiments, when the authentication performed on the user identity based on the first driving data fails, an authentication manner in which the vehicle performs the authentication on the user identity again is not the first authentication manner. For example, the first authentication manner is the authentication manner that has great interference to the user, for example, the password authentication, the PIN code authentication, or fingerprint authentication. The authentication manner in which the authentication is performed on the user identity again is the authentication manner that has small interference to the user, for example, the facial authentication or the voiceprint authentication, to reduce the interference to the user driving the vehicle.

In some embodiments, when an authentication result obtained by performing the authentication on the user identity based on the first driving data is different, an operation performed by the vehicle is different. For details, refer to the description of S705 in FIG. 8.

In some embodiments, an authentication result obtained by performing the authentication on the user identity by the vehicle may be sent to another connected device, thereby reducing steps of performing the authentication by the another device. For example, when the authentication performed on the user identity based on the first driving data fails, the vehicle sends first indication information to the connected device, where the first indication information indicates that the authentication performed on the user identity fails, and the connected device performs the authentication on the user identity after receiving the first indication information. When the authentication performed on the user identity based on the first driving data succeeds, the vehicle sends second indication information to the connected device, where the second indication information indicates that the authentication performed on the user identity succeeds, and after receiving the second indication information, the connected device can directly enable permission to use a third function of the connected device without repeated authentication. This reduces the steps of performing the authentication by the connected device. For a specific example, refer to FIG. 9F-1 and FIG. 9F-2.

For example, the facial authentication is performed after the user enters the vehicle (that is, the authentication is performed on the user identity in the first authentication manner), and the authentication succeeds. In a subsequent process of driving the vehicle, the vehicle performs the authentication on the user identity based on the first driving data. If the authentication succeeds, the vehicle keeps enabling the permission to use the first function. Subsequently, if the vehicle receives the user operation used to enable the first function, because the authentication performed on the user identity based on the first driving data succeeds, the vehicle can enable the first function (for example, small-amount payment) without performing the authentication on the user identity in the first authentication manner. If the authentication fails, if the vehicle subsequently receives the user operation used to enable the first function, the vehicle performs the authentication on the user identity in the first authentication manner, and enables the first function only after the authentication succeeds.

It may be understood that, in this application, limiting the function of the vehicle may be understood as disabling permission to use the function of the vehicle, and canceling the limitation on the function of the vehicle may be understood as enabling the permission to use the function of the vehicle.

"Collection" in the foregoing embodiment may also be replaced with "monitoring", "recording", "obtaining", or the like. In the foregoing embodiment, an example in which the driving behavior data is collected by using a collection module like a sensor is used for description. However, in specific implementation, real-time driving behavior data may alternatively be obtained by using another device, for example, a processor, a vehicle-mounted computer, or a transceiver. This is not limited in this application.

It should be noted that, in embodiments of this application, "at least one" means one or more, and "a plurality of" means two or more. Unless otherwise defined, all technical and scientific terms used in this specification have same meanings as those usually understood by a person skilled in the art of this application. Terms used in the specification of this application are merely for the purpose of describing specific embodiments, but are not intended to limit this application. It should be understood that, unless otherwise stated in this application, "/" means or. For example, A/B may indicate A or B. In this application, a term "and/or" describes only an association relationship between associated objects and indicates that three relationships may exist. It should be noted that in embodiments of this application, terms such as "first" and "second" are merely used for distinguishing and description, and should not be understood as indicating or implying relative importance, and should not be understood as indicating or implying a sequence. A feature limited by "first" and "second" may explicitly or implicitly include one or more features. In descriptions of embodiments of this application, words such as "example" or "for example" are used to indicate giving an example, an illustration, or a description. Any embodiment or design scheme described as an "example" or "for example" in embodiments of this application should not be explained as being more preferred or having more advantages than another embodiment or design scheme. Exactly, use of the words such as "example" or "for example" is intended to present a relative concept in a specific manner.

A person of ordinary skill in the art may understand that all or some of the processes of the methods in the foregoing embodiments may be implemented by a computer program instructing related hardware. The computer program may be stored in a computer-readable storage medium. When the computer program is run, the processes in the foregoing method embodiments are performed. The storage medium includes any medium that can store computer program code, for example, a read-only memory (read-only memory, ROM), a random access memory (random access memory, RAM), a magnetic disk, or an optical disc.

## Claims

1. An identity authentication method, applied to a vehicle (100), wherein the method comprises:
performing (S801) authentication on a user identity in a first authentication manner;
enabling (S802) permission to use a first function of the vehicle (100) when the authentication performed on the user identity in the first authentication manner succeeds;
collecting (S803) first driving data of a user; **characterised by**
classifying the first driving data based on a plurality of obtained driving scenarios, to obtain second driving data and performing the authentication on the user identity based on the second driving data, wherein the first authentication manner is a manner in which the authentication is not performed on the user identity based on the second driving data;
disabling (S804) the permission to use the first function when the authentication performed on the user identity based on the second driving data fails; and
keeping the permission to use the first function enabled when the authentication performed on the user identity based on the second driving data succeeds;
wherein the first authentication manner comprises at least one of the following: vehicle (100) key authentication, password authentication, biological feature authentication, and connected device authentication.

2. The method according to claim 1, wherein the method further comprises:
enabling the first function when the authentication performed on the user identity in the first authentication manner succeeds.

3. The method according to claim 1, wherein the method further comprises:
receiving a first user operation when the permission to use the first function is enabled; and
enabling the first function in response to the first user operation.

4. The method according to claim 1, wherein the disabling the permission to use the first function when the authentication performed on the user identity based on the second driving data fails comprises:
performing the authentication on the user identity in the first authentication manner when the authentication performed on the user identity based on the second driving data fails; and
disabling the permission to use the first function when the authentication performed on the user identity in the first authentication manner fails.

5. The method according to claim 4, wherein the performing the authentication on the user identity in the first authentication manner when the authentication performed on the user identity based on the second driving data fails comprises:
outputting first information when the authentication performed on the user identity based on the second driving data fails, wherein the first information is used to prompt the user to perform the identity authentication;
receiving a second user operation; and
performing the authentication on the user identity in the first authentication manner in response to the second user operation.

6. The method according to claim 1, wherein the disabling the permission to use the first function when the authentication performed on the user identity based on the second driving data fails comprises:
outputting second information when the authentication performed on the user identity based on the second driving data fails, wherein the second information is used to prompt the user to perform the identity authentication; and
disabling the permission to use the first function if no third user operation is received or a fourth user operation is received within a first period of time, wherein the third user operation is used to perform the identity authentication, and the fourth user operation is used to cancel the identity authentication.

7. The method according to any one of claims 4 to 6, wherein before the disabling the permission to use the first function, the method further comprises:
disabling a permission to use a second function of the vehicle (100) when the authentication performed on the user identity based on the second driving data fails, wherein the second function is different from the first function.

8. The method according to claim 1, wherein the method further comprises:
when the authentication performed on the user identity based on the second driving data fails, disabling a second function of the vehicle (100), and performing the authentication on the user identity in the first authentication manner, wherein the second function is different from the first function; and
enabling permission to use the second function when the authentication performed on the user identity in the first authentication manner succeeds.

9. The method according to claim 7 or 8, wherein the first function comprises a function of operating a driving component (150) of the vehicle (100) and a navigation function, and the second function does not comprise the function of operating the driving component (150) of the vehicle (100) and the navigation function.

10. The method according to claim 1, wherein the performing the authentication on the user identity based on the second driving data comprises:
performing the authentication on the user identity based on the second driving data and a driving feature template of the user; and
before the performing the authentication on the user identity based on the second driving data, the method further comprises:
receiving third driving data of the user sent by a first device; and
determining the driving feature template of the user based on the third driving data.

11. The method according to claim 10, wherein before the determining the driving feature template of the user based on the third driving data, the method further comprises:
collecting fourth driving data of the user; and
the determining the driving feature template of the user based on the third driving data comprises:
determining the driving feature template of the user based on the third driving data and the fourth driving data.

12. The method according to claim 10 or 11, wherein the method further comprises:
performing the authentication on the user identity in the first authentication manner when the authentication performed on the user identity based on the second driving data fails; and
updating the driving feature template of the user based on the second driving data when the authentication performed on the user identity in the first authentication manner succeeds.

13. The method according to claim 10 or 11, wherein the method further comprises:
updating the driving feature template of the user based on the second driving data when the authentication performed on the user identity based on the second driving data succeeds.

14. The method according to claim 1, wherein the method further comprises:
sending first indication information to a second device when the authentication performed on the user identity based on the second driving data fails, wherein the first indication information indicates that the authentication on the user identity fails, and the second device is configured to perform the authentication on the user identity after receiving the first indication information; or
sending second indication information to the second device when the authentication performed on the user identity based on the second driving data succeeds, wherein the second indication information indicates that the authentication on the user identity succeeds, and the second device is configured to enable permission to use a third function of the second device when receiving the second indication information.

15. A vehicle (100), comprising a transceiver (130, 143), a processor (110, 141), and a memory (120, 142), wherein the memory (120, 142) is configured to store a computer program, and the processor (110, 141) invokes the computer program to perform the method according to any one of claims 1 to 14.

## Patentansprüche

1. Identitätsauthentifizierungsverfahren, das auf ein Fahrzeug (100) angewendet wird, wobei das Verfahren umfasst:
Durchführen (S801) einer Authentifizierung einer Benutzeridentität auf eine erste Authentifizierungsweise;
Aktivieren (S802) einer Erlaubnis, eine erste Funktion des Fahrzeugs (100) zu verwenden, wenn die auf die erste Authentifizierungsweise durchgeführte Authentifizierung der Benutzeridentität erfolgreich ist;
Erfassen (S803) erster Fahrdaten eines Benutzers; **gekennzeichnet durch** Klassifizieren der ersten Fahrdaten basierend auf einer Vielzahl von erhaltenen Fahrszenarien, um zweite Fahrdaten zu erhalten, und Durchführen der Authentifizierung der Benutzeridentität basierend auf den zweiten Fahrdaten, wobei die erste Authentifizierungsweise eine Weise ist, bei der die Authentifizierung der Benutzeridentität nicht basierend auf den zweiten Fahrdaten durchgeführt wird;
Deaktivieren (S804) der Erlaubnis, die erste Funktion zu verwenden, wenn die basierend auf den zweiten Fahrdaten durchgeführte Authentifizierung der Benutzeridentität fehlschlägt; und
Beibehalten der aktivierten Erlaubnis, die erste Funktion zu verwenden, wenn die basierend auf den zweiten Fahrdaten durchgeführte Authentifizierung der Benutzeridentität erfolgreich ist;
wobei die erste Authentifizierungsweise mindestens eines der Folgenden umfasst:
Schlüsselauthentifizierung des Fahrzeugs (100), Passwortauthentifizierung, Authentifizierung biologischer Merkmale und Authentifizierung einer verbundenen Vorrichtung.

2. Verfahren nach Anspruch 1, wobei das Verfahren ferner umfasst:
Aktivieren der ersten Funktion, wenn die auf die erste Authentifizierungsweise durchgeführte Authentifizierung der Benutzeridentität erfolgreich ist.

3. Verfahren nach Anspruch 1, wobei das Verfahren ferner umfasst:
Empfangen einer ersten Benutzeroperation, wenn die Erlaubnis, die erste Funktion zu verwenden, aktiviert ist; und Aktivieren der ersten Funktion als Reaktion auf die erste Benutzeroperation.

4. Verfahren nach Anspruch 1, wobei das Deaktivieren der Erlaubnis, die erste Funktion zu verwenden, wenn die basierend auf den zweiten Fahrdaten durchgeführte Authentifizierung der Benutzeridentität fehlschlägt, umfasst:
Durchführen der Authentifizierung der Benutzeridentität auf die erste Authentifizierungsweise, wenn die basierend auf den zweiten Fahrdaten durchgeführte Authentifizierung der Benutzeridentität fehlschlägt; und
Deaktivieren der Erlaubnis, die erste Funktion zu verwenden, wenn die auf die erste Authentifizierungsweise durchgeführte Authentifizierung der Benutzeridentität fehlschlägt.

5. Verfahren nach Anspruch 4, wobei das Durchführen der Authentifizierung der Benutzeridentität auf die erste Authentifizierungsweise, wenn die basierend auf den zweiten Fahrdaten durchgeführte Authentifizierung der Benutzeridentität fehlschlägt, umfasst:
Ausgeben erster Informationen, wenn die basierend auf den zweiten Fahrdaten durchgeführte Authentifizierung der Benutzeridentität fehlschlägt, wobei die ersten Informationen verwendet werden, um den Benutzer aufzufordern, die Identitätsauthentifizierung durchzuführen;
Empfangen einer zweiten Benutzeroperation; und
Durchführen der Authentifizierung der Benutzeridentität auf die erste Authentifizierungsweise als Reaktion auf die zweite Benutzeroperation.

6. Verfahren nach Anspruch 1, wobei das Deaktivieren der Erlaubnis, die erste Funktion zu verwenden, wenn die basierend auf den zweiten Fahrdaten durchgeführte Authentifizierung der Benutzeridentität fehlschlägt, umfasst:
Ausgeben zweiter Informationen, wenn die basierend auf den zweiten Fahrdaten durchgeführte Authentifizierung der Benutzeridentität fehlschlägt, wobei die zweiten Informationen verwendet werden, um den Benutzer aufzufordern, die Identitätsauthentifizierung durchzuführen; und
Deaktivieren der Erlaubnis, die erste Funktion zu verwenden, falls innerhalb einer ersten Zeitspanne keine dritte Benutzeroperation empfangen wird oder eine vierte Benutzeroperation empfangen wird, wobei die dritte Benutzeroperation verwendet wird, um die Identitätsauthentifizierung durchzuführen, und die vierte Benutzeroperation verwendet wird, um die Identitätsauthentifizierung abzubrechen.

7. Verfahren nach einem der Ansprüche 4 bis 6, wobei vor dem Deaktivieren der Erlaubnis, die erste Funktion zu verwenden, das Verfahren ferner umfasst:
Deaktivieren einer Erlaubnis, eine zweit Funktion des Fahrzeugs (100) zu verwenden, wenn die basierend auf den zweiten Fahrdaten durchgeführte Authentifizierung der Benutzeridentität fehlschlägt, wobei sich die zweite Funktion von der ersten Funktion unterscheidet.

8. Verfahren nach Anspruch 1, wobei das Verfahren ferner umfasst:
wenn die basierend auf den zweiten Fahrdaten durchgeführte Authentifizierung der Benutzeridentität fehlschlägt, Deaktivieren einer zweiten Funktion des Fahrzeugs (100) und Durchführen der Authentifizierung der Benutzeridentität auf die erste Authentifizierungsweise, wobei sich die zweite Funktion von der ersten Funktion unterscheidet; und
Aktivieren der Erlaubnis, die zweite Funktion zu verwenden, wenn die auf die erste Authentifizierungsweise durchgeführte Authentifizierung der Benutzeridentität erfolgreich ist.

9. Verfahren nach Anspruch 7 oder 8, wobei die erste Funktion eine Funktion zum Betreiben einer Fahrkomponente (150) des Fahrzeugs (100) und eine Navigationsfunktion umfasst, und die zweite Funktion die Funktion zum Betreiben der Fahrkomponente (150) des Fahrzeugs (100) und die Navigationsfunktion nicht umfasst.

10. Verfahren nach Anspruch 1, wobei das Durchführen der Authentifizierung der Benutzeridentität basierend auf den zweiten Fahrdaten umfasst:
Durchführen der Authentifizierung der Benutzeridentität basierend auf den zweiten Fahrdaten und einer Fahrmerkmalsvorlage des Benutzers; und
das Verfahren vor dem Durchführen der Authentifizierung der Benutzeridentität basierend auf den zweiten ferner umfasst:
Empfangen dritter Fahrdaten des Benutzers, die von einer ersten Vorrichtung gesendet werden; und
Bestimmen der Fahrmerkmalsvorlage des Benutzers basierend auf den dritten Fahrdaten.

11. Verfahren nach Anspruch 10, wobei das Verfahren vor dem Bestimmen der Fahrmerkmalsvorlage des Benutzers basierend auf den dritten Fahrdaten ferner umfasst:
Erfassen vierter Fahrdaten des Benutzers; und
das Bestimmen der Fahrmerkmalsvorlage des Benutzers basierend auf den dritten Fahrdaten umfasst:
Bestimmen der Fahrmerkmalsvorlage des Benutzers basierend auf den dritten Fahrdaten und den vierten Fahrdaten.

12. Verfahren nach Anspruch 10 oder 11, wobei das Verfahren ferner umfasst:
Durchführen der Authentifizierung der Benutzeridentität auf die erste Authentifizierungsweise, wenn die basierend auf den zweiten Fahrdaten durchgeführte Authentifizierung der Benutzeridentität fehlschlägt; und
Aktualisieren der Fahrmerkmalsvorlage des Benutzers basierend auf den zweiten Fahrdaten, wenn die auf die erste Authentifizierungsweise durchgeführte Authentifizierung der Benutzeridentität erfolgreich ist.

13. Verfahren nach Anspruch 10 oder 11, wobei das Verfahren ferner umfasst:
Aktualisieren der Fahrmerkmalsvorlage des Benutzers basierend auf den zweiten Fahrdaten, wenn die basierend auf den zweiten Fahrdaten durchgeführte Authentifizierung der Benutzeridentität erfolgreich ist.

14. Verfahren nach Anspruch 1, wobei das Verfahren ferner umfasst:
Senden erster Anzeigeinformationen an eine zweite Vorrichtung, wenn die basierend auf den zweiten Fahrdaten durchgeführte Authentifizierung der Benutzeridentität fehlschlägt, wobei die ersten Anzeigeinformationen anzeigen, dass die Authentifizierung der Benutzeridentität fehlschlägt, und die zweite Vorrichtung konfiguriert ist, um die Authentifizierung der Benutzeridentität nach Empfangen der ersten Anzeigeinformationen durchzuführen; oder
Senden zweiter Anzeigeinformationen an die zweite Vorrichtung, wenn die basierend auf den zweiten Fahrdaten durchgeführte Authentifizierung der Benutzeridentität erfolgreich ist, wobei die zweiten Anzeigeinformationen anzeigen, dass die Authentifizierung der Benutzeridentität erfolgreich ist, und die zweite Vorrichtung konfiguriert ist, um bei dem Empfangen der zweiten Anzeigeinformationen eine Erlaubnis, eine dritte Funktion der zweiten Vorrichtung zu verwenden, zu aktivieren.

15. Fahrzeug (100), das einen Transceiver (130, 143), einen Prozessor (110, 141) und einen Speicher (120, 142) umfasst, wobei der Speicher (120, 142) konfiguriert ist, um ein Computerprogramm zu speichern, und der Prozessor (110, 141) das Computerprogramm aufruft, um das Verfahren nach einem der Ansprüche 1 bis 14 durchzuführen.

## Revendications

1. Procédé d'authentification d'identité, appliqué à un véhicule (100), dans lequel le procédé comprend :
la réalisation (S801) d'une authentification sur une identité d'utilisateur selon un premier mode d'authentification ;
l'activation (S802) d'une autorisation d'utiliser une première fonction du véhicule (100) lorsque l'authentification effectuée sur l'identité d'utilisateur selon le premier mode d'authentification aboutit ;
la collecte (S803) de premières données de conduite d'un utilisateur ; **caractérisé par** la classification des premières données de conduite sur la base d'une pluralité de scénarios de conduite obtenus, pour obtenir des deuxièmes données de conduite et la réalisation de l'authentification sur l'identité d'utilisateur sur la base des deuxièmes données de conduite, dans lequel le premier mode d'authentification est un mode dans lequel l'authentification n'est pas effectuée sur l'identité d'utilisateur sur la base des deuxièmes données de conduite ;
la désactivation (S804) de l'autorisation d'utiliser la première fonction lorsque l'authentification effectuée sur l'identité d'utilisateur sur la base des deuxièmes données de conduite échoue ; et
le maintien de l'autorisation d'utiliser la première fonction activée lorsque l'authentification effectuée sur l'identité d'utilisateur sur la base des deuxièmes données de conduite aboutit ;
dans lequel le premier mode d'authentification comprend au moins l'un de ce qui suit :
une authentification par clé de véhicule (100), une authentification par mot de passe, une authentification par caractéristique biologique, et une authentification par dispositif connecté.

2. Procédé selon la revendication 1, dans lequel le procédé comprend en outre :
l'activation de la première fonction lorsque l'authentification effectuée sur l'identité d'utilisateur selon le premier mode d'authentification aboutit.

3. Procédé selon la revendication 1, dans lequel le procédé comprend en outre :
la réception d'une première opération d'utilisateur lorsque l'autorisation d'utiliser la première fonction est activée ; et l'activation de la première fonction en réponse à la première opération d'utilisateur.

4. Procédé selon la revendication 1, dans lequel la désactivation de l'autorisation d'utiliser la première fonction lorsque l'authentification effectuée sur l'identité d'utilisateur sur la base des deuxièmes données de conduite échoue comprend :
la réalisation de l'authentification sur l'identité d'utilisateur selon le premier mode d'authentification lorsque l'authentification effectuée sur l'identité d'utilisateur sur la base des deuxièmes données de conduite échoue ; et
la désactivation de l'autorisation d'utiliser la première fonction lorsque l'authentification effectuée sur l'identité d'utilisateur selon le premier mode d'authentification échoue.

5. Procédé selon la revendication 4, dans lequel la réalisation de l'authentification sur l'identité d'utilisateur selon le premier mode d'authentification lorsque l'authentification effectuée sur l'identité d'utilisateur sur la base des deuxièmes données de conduite échoue comprend :
l'émission de premières informations lorsque l'authentification effectuée sur l'identité d'utilisateur sur la base des deuxièmes données de conduite échoue, dans lequel les premières informations sont utilisées pour inviter l'utilisateur à effectuer l'authentification d'identité ;
la réception d'une deuxième opération d'utilisateur ; et
la réalisation de l'authentification sur l'identité d'utilisateur selon le premier mode d'authentification en réponse à la deuxième opération d'utilisateur.

6. Procédé selon la revendication 1, dans lequel la désactivation de l'autorisation d'utiliser la première fonction lorsque l'authentification effectuée sur l'identité d'utilisateur sur la base des deuxièmes données de conduite échoue comprend :
l'émission de secondes informations lorsque l'authentification effectuée sur l'identité d'utilisateur sur la base des deuxièmes données de conduite échoue, dans lequel les secondes informations sont utilisées pour inviter l'utilisateur à effectuer l'authentification d'identité ; et
la désactivation de l'autorisation d'utiliser la première fonction si aucune troisième opération d'utilisateur n'est reçue ou si une quatrième opération d'utilisateur est reçue dans un premier laps de temps, dans lequel la troisième opération d'utilisateur est utilisée pour effectuer l'authentification d'identité, et la quatrième opération d'utilisateur est utilisée pour annuler l'authentification d'identité.

7. Procédé selon l'une quelconque des revendications 4 à 6, dans lequel, avant la désactivation de l'autorisation d'utiliser la première fonction, le procédé comprend en outre :
la désactivation d'une autorisation d'utiliser une deuxième fonction du véhicule (100) lorsque l'authentification effectuée sur l'identité d'utilisateur sur la base des deuxièmes données de conduite échoue, dans lequel la deuxième fonction est différente de la première fonction.

8. Procédé selon la revendication 1, dans lequel le procédé comprend en outre :
lorsque l'authentification effectuée sur l'identité d'utilisateur sur la base des deuxièmes données de conduite échoue, la désactivation d'une deuxième fonction du véhicule (100), et la réalisation de l'authentification sur l'identité d'utilisateur selon le premier mode d'authentification, dans lequel la deuxième fonction est différente de la première fonction ; et
l'activation de l'autorisation d'utiliser la deuxième fonction lorsque l'authentification effectuée sur l'identité d'utilisateur selon le premier mode d'authentification aboutit.

9. Procédé selon la revendication 7 ou 8, dans lequel la première fonction comprend une fonction de fonctionnement d'un composant de conduite (150) du véhicule (100) et une fonction de navigation, et la deuxième fonction ne comprend pas la fonction de fonctionnement du composant de conduite (150) du véhicule (100) et la fonction de navigation.

10. Procédé selon la revendication 1, dans lequel la réalisation de l'authentification sur l'identité d'utilisateur sur la base des deuxièmes données de conduite comprend :
la réalisation de l'authentification sur l'identité d'utilisateur sur la base des deuxièmes données de conduite et d'un modèle de caractéristique de conduite de l'utilisateur ; et
avant la réalisation de l'authentification sur l'identité d'utilisateur sur la base des deuxièmes données de conduite, le procédé comprend en outre :
la réception de troisièmes données de conduite de l'utilisateur envoyées par un premier dispositif ; et
la détermination du modèle de caractéristique de conduite de l'utilisateur en fonction des troisièmes données de conduite.

11. Procédé selon la revendication 10, dans lequel, avant la détermination du modèle de caractéristique de conduite de l'utilisateur sur la base des troisièmes données de conduite, le procédé comprend en outre :
la collecte de quatrièmes données de conduite de l'utilisateur ; et
la détermination du modèle de caractéristique de conduite de l'utilisateur sur la base des troisièmes données de conduite comprend :
la détermination du modèle de caractéristique de conduite de l'utilisateur sur la base des troisièmes données de conduite et des quatrièmes données de conduite.

12. Procédé selon la revendication 10 ou 11, dans lequel le procédé comprend en outre :
la réalisation de l'authentification sur l'identité d'utilisateur selon le premier mode d'authentification lorsque l'authentification effectuée sur l'identité d'utilisateur sur la base des deuxièmes données de conduite échoue ; et
la mise à jour du modèle de caractéristique de conduite de l'utilisateur sur la base des deuxièmes données de conduite lorsque l'authentification effectuée sur l'identité d'utilisateur selon le premier mode d'authentification aboutit.

13. Procédé selon la revendication 10 ou 11, dans lequel le procédé comprend en outre :
la mise à jour du modèle de caractéristique de conduite de l'utilisateur sur la base des deuxièmes données de conduite lorsque l'authentification effectuée sur l'identité d'utilisateur sur la base des deuxièmes données de conduite aboutit.

14. Procédé selon la revendication 1, dans lequel le procédé comprend en outre :
l'envoi de premières informations d'indication à un second dispositif lorsque l'authentification effectuée sur l'identité d'utilisateur sur la base des deuxièmes données de conduite échoue, dans lequel les premières informations d'indication indiquent que l'authentification sur l'identité d'utilisateur échoue, et le second dispositif est configuré pour effectuer l'authentification sur l'identité d'utilisateur après avoir reçu les premières informations d'indication ; ou
l'envoi de secondes informations d'indication au second dispositif lorsque l'authentification effectuée sur l'identité d'utilisateur sur la base des deuxièmes données de conduite aboutit, dans lequel les secondes informations d'indication indiquent que l'authentification sur l'identité d'utilisateur aboutit, et le second dispositif est configuré pour activer l'autorisation d'utiliser une troisième fonction du second dispositif lors de la réception des secondes informations d'indication.

15. Véhicule (100), comprenant un émetteur-récepteur (130, 143), un processeur (110, 141), et une mémoire (120, 142), dans lequel la mémoire (120, 142) est configurée pour stocker un programme informatique, et le processeur (110, 141) invoque le programme informatique pour effectuer le procédé selon l'une quelconque des revendications 1 à 14.
